# EUROPÄISCHE PATENTSCHRIFT

(11) **EP 2 608 991 B1**
(45) Veröffentlichungstag und Bekanntmachung des Hinweises auf die Patenterteilung: **26.08.2015**
(21) Anmeldenummer: 11743218.7
(22) Anmeldetag: 21.07.2011
(51) Int. Cl.: B60R 21/261, B60R 21/217

(54) **VORRICHTUNGEN FÜR PERSONEN-SCHUTZSYSTEME EINES FAHRZEUGS**
DEVICES FOR PASSENGER PROTECTION SYSTEMS IN A VEHICLE
DISPOSITIFS POUR SYSTÈMES DE PROTECTION DE PERSONNES D'UN VÉHICULE

(30) Priorität: 27.08.2010 DE 102010039902
(43) Veröffentlichungstag der Anmeldung: 03.07.2013
(73) Patentinhaber: Takata AG, 63743 Aschaffenburg (DE)
(72) Erfinder: BAUMGARTNER, Peter, 89312 Günzburg (DE); FELLER, Jens, 89171 Illerkirchberg (DE); GRÜNER, Axel, 89129 Langenau (DE); FUCHS, Philipp, 89250 Senden (DE)
(74) Vertreter: Müller, Wolfram Hubertus
(86) Internationale Anmeldenummer: PCT/EP2011/062577
(87) Internationale Veröffentlichungsnummer: WO 2012/025317

(56) Entgegenhaltungen:
- EP-B1- 1 954 534
- WO-A1-2006/079330
- DE-A1- 10 339 523
- DE-A1- 19 743 615
- DE-A1-102009 006 077
- DE-U1- 29 801 104
- DE-U1- 29 815 940
- US-A- 5 423 568
- US-A1- 2004 150 202
- US-A1- 2008 007 035
- US-A1- 2009 039 627
- US-B2- 7 597 351

## Beschreibung

Die Erfindung betrifft Vorrichtungen für Personen-Schutzsysteme eines Fahrzeugs gemäß den Oberbegriffen der Patentansprüche 1, 7 und 10.

Bei als Fahrzeuginsassen-Rückhaltesystemen eingesetzten Gassackvorrichtungen besteht allgemein das Erfordernis, das in axialer und/oder radialer Richtung aus einem Gasgenerator ausströmende Gas in ein oder mehrere bestimmte Richtungen umzuleiten, damit das Gas einen Gassack gleichmäßig und in definierter Weise befüllen kann. Weiter ist allgemein anzustreben, dass der Gassack angrenzend an die Ausströmöffnungen eines Gasgenerators durch die ausströmenden Gase nicht beschädigt wird.

Zur Lösung dieser Probleme ist es bekannt, das aus einem Gasgenerator ausströmende Gas unter Verwendung eines als Massenstromverteiler wirkenden Gasleitelements in einen Gassack einzuleiten. Dabei ist es bekannt, ein solches Gasleitelement als Füllrohr aus Metall, als Füllschlauch aus unterschiedlichsten Geweben, als Gewebediffusor oder als starren Diffusor auszubilden.

Zur Befestigung eines Gasleitelements an einem mit Stehbolzen versehenen Gasgenerator wurde vorgeschlagen, am Gasleitelement oder einem mit diesem verbundenen Teil eine kreisförmige Öffnung auszubilden, in die ein Stehbolzen des Gasgenerators eingesetzt wird. Solche Lösungen sind in der EP 1 954 534 B1, der US 7 597 351 B1, der US 2009/0039627 A1 und der US 2008/0007035 A1 beschrieben. Sie sind jedoch mit dem Nachteil verbunden, dass das Gasleitelement und der Gasgenerator zum Einführen des Stehbolzens in die kreisförmige Öffnung zueinander gekippt oder in Querrichtung zueinander bewegt werden müssen, was bei der Montage nachteilig sein kann.

Aus der Druckschrift DE 103 39 523 A1 ist es bekannt, zur Befestigung eines Gasleitelements an einem mit Stehbolzen versehenen Gasgenerator das Gasleitelement an einem Stehbolzen zu klemmen. Die Klemmkraft wird dabei durch eine Eigenfederung des Gasleitelements bereitgestellt. Diese Lösung erfordert eine besondere Ausgestaltung des Gasleitelements.

Die DE 298 15 940 U1 beschreibt Vorrichtungen für ein Personen-Schutzsystem eines Fahrzeugs, die die Merkmale der Oberbegriffe der unabhängigen Ansprüche 1, 7 und 10 aufweisen.

Der vorliegenden Erfindung liegt die Aufgabe zugrunde, eine weitere Vorrichtung für ein Personen-Schutzsystem eines Fahrzeugs zur Verfügung zu stellen, die eine Befestigung eines Gasleitelements an einem mit Stehbolzen versehenen Gasgenerator ermöglicht.

Diese Aufgabe wird erfindungsgemäß durch eine Vorrichtung mit den Merkmalen des Anspruchs 1, eine Vorrichtung mit den Merkmalen des Anspruchs 7 und eine Vorrichtung mit den Merkmalen des Anspruchs 10 gelöst. Ausgestaltungen der Erfindung sind in den Unteransprüchen angegeben.

Danach sieht eine erste Ausgestaltung der Erfindung vor, dass das Gasleitelement mittels eines Bajonett-Verschlusses mit mindestens einem der Stehbolzen des Gasgenerators verbunden ist. Unter einem Bajonett-Verschluss wird dabei jede Art von Verschluss verstanden, bei der eine Verbindung des Gasleitelements mit dem Stehbolzen bzw. dem Gasgenerator zumindest eine axiale Steckbewegung und eine zu dieser im Wesentlichen quer, d.h. in Umfangsrichtung erfolgende Drehbewegung umfasst. Daran können sich weitere Relativbewegungen anschließen, bis der Stehbolzen seine Endposition im Bajonett-Verschluss erreicht hat. Die axiale Steckbewegung kann dabei, muss aber nicht in geführter Form erfolgen.

Durch Verbinden des Gasleitelementes mit einem Stehbolzen des Gasgenerators mittels eines Bajonett-Verschlusses wird eine schnell zu realisierende Verbindung der beiden Teile ermöglicht. Zur Realisierung eines Bajonett-Verschlusses sind dabei lediglich eine axiale Bewegung und eine Bewegung in Umfangsrichtung erforderlich, nicht dagegen eine Kipp- oder eine Querbewegung, so dass nur ein geringer Platzbedarf bei der Montage besteht.

Gemäß der Erfindung ist weiter vorgesehen, dass das Gasleitelement zur Bildung eines Bajonett-Verschlusses einen Fügekanal für einen Stehbolzen des Gasgenerators ausbildet. Dieser Fügekanal ist beispielsweise derart geformt, dass er einen ersten, im Wesentlichen axial verlaufenden Bereich und einen zweiten, sich an den ersten Bereich anschließenden, im Wesentlichen quer verlaufenden Bereich aufweist. Daran kann sich ein dritter, sich an den zweiten Bereich anschließender und wiederum im Wesentlichen axial verlaufenden Bereich anschließen. Durch den ersten Bereich erfolgt die axiale Steckbewegung in geführter Form. Durch den zusätzlichen dritten Bereich wird eine zusätzliche Sicherung der Verbindung erreicht. So kann, nachdem der Stehbolzen seine Endposition am Ende des dritten Bereichs erreicht hat, die Verbindung nicht durch ledigliches Drehen des Gasleitelements wieder gelöst werden. Insbesondere ein unbeabsichtigtes Lösen der Verbindung durch Rüttelbewegungen wird hierdurch sicher verhindert.

In einer weiteren Ausgestaltung der Erfindung ist vorgesehen, dass der Fügekanal ausschließlich aus einem im Wesentlichen quer zur Längsachse des Gasleitelements verlaufenden Bereich besteht, der an einem axial vorstehenden Teil des Gasleitelements ausgebildet ist. Die axiale Steckbewegung des Gasleitelements in Bezug auf den Stehbolzen, die den einen Bestandteil eines Bajonett-Verschlusses ausmacht, erfolgt dabei nicht in geführter Form, d.h. nicht in einem Kanal oder einer Aussparung. Bei Ausführen der axialen Steckbewegung gerät der Stehbolzen zunächst in Anschlag an das stirnseitige Ende des Gasleitelements. Anschließend erfolgt eine in Umfangsrichtung erfolgende Drehbewegung, die den anderen Bestandteil eines Bajonett-Verschlusses ausmacht, wobei der Stehbolzen in den Fügekanal des vorstehenden Teils einführt wird.

Gemäß der Erfindung ist weiter vorgesehen, dass das Gasleitelement Mittel zur Verriegelung des Bajonett-Verschlusses aufweist. Diese können in unterschiedlicher Weise ausgebildet sein. In einer Ausführungsvariante umfassen die Mittel zur Verriegelung des Bajonett-Verschlusses eine federnd am Gasleitelement angeordnete oder ausgebildete Rastnase, die den Stehbolzen nach Erreichen seiner Endposition im Bajonett-Verschluss arretiert. Die Rastnase ragt dabei in den Fügekanal, so dass sie bei Einbringen des Stehbolzens in den Fügekanal ausgelenkt wird.

Zur Realisierung einer federnden Ausbildung der Rastnase kann beispielsweise vorgesehen sein, dass das Gasleitelement aus einem gerollten Zuschnitt besteht und die Rastnase an dem Zuschnitt angeformt ist. Zwei Längskanten des Zuschnitts überlappen im gerollten Zustand einander, wobei der Grad der Überlappung bei Auftreten einer in Umfangsrichtung auftretenden Kraft variiert. Bei Einführen eines Stehbolzens in den Fügekanal übt dieser eine im Umfangsrichtung wirkende Kraft auf die Rastnase und damit auf den Zuschnitt aus, was zu einer Änderung des Überlappungsgrades der Längskanten führt, wodurch die Rastnase wegfedert. Alternativ kann vorgesehen sein, dass die Rastnase als federnde Zunge im Bereich des Fügekanals ausgebildet ist.

In einer weiteren Ausführungsvariante umfassen die Mittel zur Verriegelung des Bajonett-Verschlusses eine am Gasleitelement angeordnete Lasche, die im nicht montierten Zustand schräg in das Innere des Gasleitelements ragt und die bei Aufsetzen einer Mutter oder dergleichen auf den Stehbolzen und Anziehen der Mutter sich gerade ausrichtet und dabei das Gasleitelement zusätzlich am Gasgenerator fixiert.

Erfindungsgemäß umfassen die Mittel zur Verriegelung des Bajonett-Verschlusses eine am Gasleitelement angeordnete, biegbare Lasche, mittels derer der Bajonett-Verschluss nach Erreichen der Endposition des Stehbolzens durch Umbiegen der Lasche gesichert werden kann.

Die Erfindung sieht weiter vor, dass das Gasleitelement ist in dem Bereich, in dem es den Fügekanal bildet, zumindest teilweise durch eine von der Umfangswand des Gasleitelements axial abstehende Lasche gebildet ist.

Weiter weist das Gasleitelement in dem Bereich, in dem es den Fügekanal bildet, gemäß einer Ausführungsvariante der Erfindung zumindest teilweise eine Materialverstärkung auf. Dies ermöglicht es, auch bei geringer Materialstärke des Gasleitelements sicherzustellen, dass bei Einströmen von Gas aus dem Gasgenerator in das Gasleitelement auftretende Kräfte sicher beherrscht werden können.

Eine Ausführungsvariante dazu sieht vor, dass eine Lasche des Gasleitelements durch Aufeinanderklappen mindestens zweier Laschenteile gebildet oder ein Materialdoppler auf der Lasche angeordnet ist, so dass die Lasche im Vergleich mit der Umfangswand des Gasleitelements eine erhöhte Materialdicke aufweist.

In einer zweiten Ausgestaltung der Erfindung erfolgt eine Verbindung des Gasleitelementes mit dem Gasgenerator in der Weise, dass das Gasleitelement mindestens eine Aussparung aufweist, in die ein Stehbolzen des Gasgenerators bei Aufschieben des Gasleitelements in axialer Richtung auf den Gasgenerator eingeführt wird. Hierdurch wird eine gewisse Fixierung des Gasleitelementes am Stehbolzen des Gasgenerators in dem Sinne erreicht, dass eine Drehbewegung zwischen dem Gasleitelement und dem Gasgenerator verhindert und durch das Ende der Aussparung ein axialer Anschlag bereitgestellt wird.

Das Gasleitelement weist erfindungsgemäß des Weiteren mindestens ein Sicherungselement auf, das dazu vorgesehen und ausgebildet ist, in eine weitere Struktur eingehängt zu werden und dadurch das Gasleitelement zusätzlich in axialer Richtung am Gasgenerator zu sichern. Das Einhängen kann beispielsweise in einen Modulträger oder in einen Gassack eines Gassackmoduls erfolgen. Das Sicherungselement dient dazu, bei Einströmen von Gas aus dem Gasgenerator in das Gasleitelement und dabei auftretenden starken axialen Kräften das Gasleitelement zusätzlich axial am Gasgenerator zu sichern.

Ein Einhängen des Sicherungselements in eine weitere Struktur ist dabei dahingehend zu verstehen, dass das Sicherungselement nicht fest mit der weiteren Struktur verbunden wird. Gesonderte Befestigungsmaßnahmen sind somit nicht erforderlich. Beispielsweise ist das Sicherungselement als Lasche ausgebildet, die eine Öse oder Öffnung der Struktur durchragt und dadurch eingehängt ist.

Die genannte Aussparung ist beispielsweise länglich ausgebildet und axial ausgerichtet. Ihre Breite ist zumindest so groß wie der Durchmesser des Stehbolzens, so dass dieser ohne Klemmung in der Aussparung angeordnet ist.

In einer Ausgestaltung ist die Aussparung an einem axial von der Umfangswand des Gasleitelements abstehenden Teil ausgebildet. Sie wird beispielsweise zwischen zwei Rastarmen bereitgestellt, die stirnseitig von dem Gasleitelement abstehen.

Weiter sind in einer Ausführungsvariante Rastmittel vorgesehen, die einen in die Aussparung eingeführten Stehbolzen darin verrasten. Bei Einführen des Stehbolzens in die Aussparung wird dieser also zusätzlich in der Aussparung verrastet, so dass zumindest bei lediglich geringen axialen Kräften auch eine axiale Fixierung von Gasleitelement und Gasgenerator erfolgt. Die Rastmittel werden beispielsweise durch an Rastarmen ausgebildete, nach innen ragende Vorsprünge bereitgestellt, die die Aussparung in diesem Bereich verengen.

Das Sicherungselement ist erfindungsgemäß durch eine Einhängelasche gebildet, wobei das Ende der Einhängelasche in eine Richtung weist, die von dem Gasgenerator weg gerichtet ist. Hierdurch wird ein Einhängen derart ermöglicht, dass eine Sicherung gegen axiale Kräfte gegeben ist, die bei Einströmen von Gas in das Gasleitelement entstehen können und das Gasleitelement vom Gasgenerator wegdrücken. Das Sicherungselement kann dabei auf verschiedenste Weise am Gasleitelement angeordnet sein, sowohl stirnseitig als auch an dessen Umfang. Es kann einstückiger Bestandteil des Gasleitelements oder durch ein gesondertes, am Gasleitelement befestigtes Teil gebildet sein.

Gemäß einer Ausführungsvariante ist die Aussparung des Gasleitelements in einem Teil ausgebildet ist, das sich ausgehend von seiner Verbindung mit der Umfangswand des Gasleitelements in einer ersten Richtung erstreckt. Des Weiteren erstreckt sich das Sicherungselement ausgehend von seiner Verbindung mit der Umfangswand des Gasleitelements in eine zweite Richtung, wobei die erste Richtung und die zweite Richtung entgegengesetzt sind. Das Sicherungselement und das Fixierungselement erstrecken sich somit in entgegengesetzter Richtung.

In einer dritten Ausgestaltung der Erfindung erfolgt eine Verbindung des Gasleitelementes mit dem Gasgenerator in der Weise, dass das Gasleitelement einen im Wesentlichen quer verlaufenden Fügekanal aufweist, in den mindestens einer der Stehbolzen des Gasgenerators durch eine in Umfangsrichtung erfolgende Drehbewegung einführbar ist, wobei der Fügekanal zumindest teilweise an einem stirnseitig axial vorstehenden Teil des Gasleitelements ausgebildet ist. Dabei liegt der Anfang des Fügekanals an einer seitlichen Kante des vorstehenden Teils. Durch diese Erfindungsvariante wird eine einfache Ausgestaltung bereitgestellt, da der Fügekanal nur in einer Richtung im Material des Gasleitelements ausgebildet werden braucht.

Dass der Fügekanal im Wesentlichen quer verläuft ist dahingehend zu verstehen, dass er stärker in Querrichtung verläuft als in axialer Richtung, was natürlich auch einschließt, dass er näherungsweise exakt in Querrichtung verläuft. Der Fügekanal kann dabei gerade oder gebogen ausgebildet sein.

Erfindungsgemäß weist das vorstehende Teil eine biegbare oder flexible Lasche auf, mittels derer der Fügekanal nach Einführen des Stehbolzens in den Fügekanal verschließbar ist. Beispielsweise wird die Lasche erst aufgebogen, um den Fügekanal freizugeben, und wird sie nach Einführen des Stehbolzens in den Fügekanal zurückgebogen, um den Fügekanal wieder zu verschließen und den Stehbolzen in dem Fügekanal gegen ein Lösen zu sichern.

In einer weiteren Ausführungsvariante ist das vorstehende Teil gebildet durch Klappen eines im flach ausgebreiteten Materialzuschnitt des Gasleitelements ausgeschnittenen Teilbereichs, der nur über eine in axialer Richtung verlaufende Klappachse mit dem Materialzuschnitt verbunden ist, auf einen dazu im Wesentlichen symmetrisch ausgebildeten Teilbereich des Materialzuschnitts. Dabei sind in beiden Teilbereichen quer verlaufende Bereiche des Fügekanals ausgebildet, die nach Klappen des einen Teilbereichs auf den anderen Teilbereich übereinander zu liegen kommen.

Es kann vorgesehen sein, dass der im Wesentlichen quer verlaufende Fügekanal sich zu seinem Ende hin aufweitet, beispielsweise durch Bildung eines näherungsweise kreisförmigen Bereichs. Dies kann mit dem Vorteil eines gewissen Spiels zwischen dem Gasleitelement und dem Gasgenerator im verriegelten Zustand verbunden sein.

Ein weiteres Ausführungsbeispiel der Erfindung sieht vor, dass in der Umfangswand des Gasleitelements mindestens eine punktuelle oder linienförmige Verengung ausgebildet ist, die eine Kippsicherung des Gasleitelements gegenüber dem Gasgenerator bereitstellt.

Die Erfindung wird nachfolgend unter Bezugnahme auf die Figuren der Zeichnung anhand mehrerer Ausführungsbeispiele näher erläutert. Es zeigen:
- Fig. 1: ein erstes Ausführungsbeispiel eines hülsenförmigen Gasleitelements, dessen eines Ende dazu ausgebildet ist, mittels eines Bajonett-Verschlusses mit einem Stehbolzen eines Gasgenerators verbunden zu werden;
- Fig. 2: ein zweites Ausführungsbeispiel eines hülsenförmigen Gasleitelements, dessen eines Ende dazu ausgebildet ist, mittels eines Bajonett-Verschlusses mit einem Stehbolzen eines Gasgenerators verbunden zu werden, wobei der Teil des Gasleitelementes, der mit dem Stehbolzen des Gasgenerators zusammenwirkt, verstärkt ausgebildet ist;
- Fig. 3: das abgerollte Gasleitelement der Figur 2;
- Fig. 4: ein drittes Ausführungsbeispiel eines hülsenförmigen Gasleitelements, dessen eines Ende dazu ausgebildet ist, mittels eines Bajonett-Verschlusses mit einem Stehbolzen eines Gasgenerators verbunden zu werden, wobei das Gasleitelement zusätzlich ein Verriegelungselement aufweist;
- Fig. 5: eine schematische Darstellung eines per Bajonett-Verschluss mit einem Gasgenerator verbundenen Gasleitelements, wobei das Gasleitelement als Gasleitrohr ausgebildet ist;
- Fig. 6: eine Schnittdarstellung der Anordnung der Figur 5 unter Darstellung einer zusätzlichen Verriegelung des Gasleitelements mit dem Gasgenerator;
- Fig. 7A, 7B: eine erste Ausführungsvariante einer Lasche eines Gasleitelements, die mittels eines Bajonett-Verschlusses mit einem Stehbolzen eines Gasgenerators verbindbar ist, wobei die Figur 7A zwei aufgeklappte Laschenteile und die Figur 7B die zusammengeklappten Laschenteile des fertigen Gasleitelements zeigt;
- Fig. 8A, 8B, 8C: eine zweite Ausführungsvariante einer Lasche eines Gasleitelements, die mittels eines Bajonett-Verschlusses mit einem Stehbolzen eines Gasgenerators verbindbar ist, wobei die Figur 8A zwei aufgeklappte Laschenteile, die Figur 8B die zusammengeklappten Laschenteile des fertigen Gasleitelements und die Figur 8C eine punktierte Verbindung durch Schweißen oder dergleichen der beiden Laschenteile zeigt;
- Fig. 9A, 9B: eine dritte Ausführungsvariante einer Lasche eines Gasleitelements, die mittels eines Bajonett-Verschlusses mit einem Stehbolzen eines Gasgenerators verbindbar ist, wobei die Figur 9A ein Laschenteil und einen Materialdoppler und die Figur 9B eine punktierte Verbindung durch Schweißen oder dergleichen der beiden Teile zeigt;
- Fig. 10A: ein weiteres Ausführungsbeispiel eines Gasleitelements, wobei das Gasleitelement ein Vorfixierungselement für eine Vorfixierung an einem Gasgenerator und eine Einhängelasche ausbildet;
- Fig. 10B: das Gasleitelement der Figur 10A im montierten Zustand an einem Gasgenerator;
- Fig. 11A: ein weiteres Ausführungsbeispiel eines Gasleitelements, das ein Vorfixierungselement für eine Vorfixierung an einem Gasgenerator und eine Einhängelasche ausbildet;
- Fig. 11B: das Gasleitelement der Figur 11A in montiertem Zustand an einem Gasgenerator;
- Fig. 12: eine Anordnung gemäß der Figur 10B, wobei die Einhängelasche des Gasleitelements durch einen Gassack durchgeführt oder in ein oder mehrere Gassacklagen eingeführt oder in ein Befestigungselement eingehängt ist;
- Fig. 13: eine Anordnung gemäß der Figur 11B, wobei die Einhängelasche des Gasleitelements durch einen Gassack durchgeführt oder in ein oder mehrere Gassacklagen eingeführt oder in ein Befestigungselement eingehängt ist;
- Fig. 14: ein weiteres Ausführungsbeispiel eines Gasleitelementes, dessen eines Ende derart ausgebildet ist, dass es mittels eines Bajonett-Verschlusses mit einem Stehbolzen eines Gasgenerators verbindbar ist, wobei das Gasleitelement ein Federelement zur Arretierung eines solchen Stehbolzens aufweist;
- Fig. 15: das Gasleitelement der Figur 14, wobei der Federmechanismus für das Federelement dargestellt ist;
- Fig. 16: das aufgerollte Gasleitelement der Figuren 14 und 15;
- Fig. 17: das mit einem Gasgenerator verbundene Gasleitelement der Figuren 14 und 15;
- Fig. 18A: eine Schnittdarstellung des Gasleitelements der Figur 14, wobei der überlappende Zuschnitt außen anliegt;
- Fig. 18B: eine Schnittdarstellung eines alternativen Gasleitelements, bei dem der überlappende Zuschnitt nach innen geleitet ist;
- Fig. 19: ein weiteres Ausführungsbeispiel eines Gasleitelementes, das in dem Bereich, der den Teil eines Bajonett-Verschlusses ausbildet, eine Rastnase ausbildet;
- Fig. 20: eine Ansicht von vorne auf ein Gasleitelement, das dazu ausgebildet ist, mittels eines Bajonett-Verschlusses mit einem Gasgenerator verbunden zu werden, wobei das Gasleitelement mehrere lokale Einpressungen zur zusätzlichen Fixierung des Gasleitelementes in Bezug auf den Gasgenerator aufweist;
- Fig. 21: in Ansicht von oben das mit einem Gasgenerators mittels eines Bajonett-Verschlusses verbundene Gasleitelement der Figur 20, wobei zwei lokale Einpressungen zu sehen sind;
- Fig. 22: ein alternatives Ausführungsbeispiel der Verbindung eines Gasleitelementes mit einem Gasgenerator mittels eines Bajonettverschlusses, wobei lediglich eine lokale Einpressung gegenüberliegend einem Stehbolzen zur zusätzlichen Fixierung des Gasleitelements am Gasgenerator vorgesehen ist;
- Fig. 23: ein weiteres Ausführungsbeispiel eines hülsenförmigen Gasleitelementes, das im abgerollten Zustand als Materialzuschnitt dargestellt ist;
- Fig. 24A: das hülsenförmige Gasleitelement, das durch den Zuschnitt der Figur 23 hergestellt ist, in einer ersten seitlichen Ansicht;
- Fig. 24B: das hülsenförmige Gasleitelement, das durch den Zuschnitt der Figur 23 hergestellt ist, in einer zweiten seitlichen Ansicht;
- Fig. 25A: das Gasleitelement der Figuren 24A, 24B in einer ersten perspektivischen Darstellung, wobei eine lokale Einpressung des Gasleitelementes erkennbar ist; und
- Fig. 25B: das Gasleitelement der Figur 25A in einer anderen perspektivischen Darstellung, in der eine abgewinkelte Befestigungslasche des Gasleitelementes erkennbar ist.

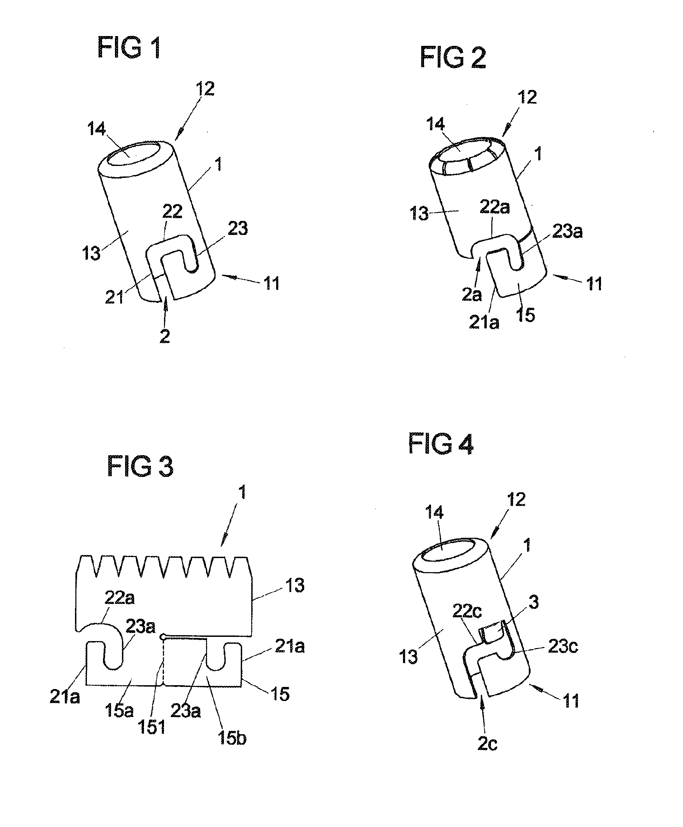

Die Figur 1 zeigt ein hülsenförmiges Gasleitelement 1. Das Gasleitelement 1 ist dazu vorgesehen, von einem Gasgenerator ausströmendes Gas umzulenken und in gewünschter Weise in einen Gassack zu leiten. Dabei kann vorgesehen sein, dass das Gasleitelement den von einem Gasgenerator bereitgestellten Gasstrom in mehrere Teilströme aufteilt. Dies ist aber nicht zwingend. Ebenso kann vorgesehen sein, dass das Gasleitelement den Gasstrom im Wesentlichen in einer Richtung abgibt. Diese unterschiedlichen Ausführungsvarianten werden durch die unterscheidenden Merkmale definiert, dass das Gasleitelement ein oder mehrere Öffnungen zum Ausströmen von Gas aus dem Gasleitelement aufweist und/oder die Verbindung des Gasleitelementes mit einem Gasgenerator im Wesentlichen gasdicht oder nicht gasdicht ausgebildet ist. Sofern bei der folgenden Beschreibung Gasleitelemente beschrieben sind, bei denen Gas in bestimmter Weise aus dem Gasleitelement austritt, so wird der Fachmann erkennen, dass bei diesen Ausführungsbeispielen der Gasaustritt aus dem Gasleitelement auch in anderer Weise realisiert sein kann, ohne von den grundlegenden Konzepten der vorliegenden Erfindung, die die Befestigung eines hülsenförmigen Gasleitelementes an einen Gasgenerator betreffen, abzuweichen.

Das Gasleitelement 1 weist ein erstes Ende 11 und ein zweites Ende 12 auf. Das erste Ende 11 ist dazu vorgesehen, mit einem Rohrgasgenerator verbunden zu werden. Das zweite Ende 12 ist dazu vorgesehen, von einem Gasgenerator abgegebenes Gas in einen Gassack zu leiten. Je nachdem, wie gasdicht das erste Ende 11 mit einem Gasgenerator verbunden ist, kann dabei auch vorgesehen sein, dass durch das erste Ende 11 Gas austritt und in einen Gassack geleitet wird. Zwischen den beiden Enden 11, 12 ist das Gasleitelement 1 rohrförmig ausgebildet, wozu es eine mit einer Innenbohrung 14 versehene zylindrische Umfangswand 13 aufweist.

An seinem ersten Ende 11 ist eine schlitzförmige Aussparung 2 in dem Gasleitelement 1 realisiert, die einen Fügekanal eines Bajonett-Verschlusses bildet. Sie ist dazu ausgebildet, zusammen mit einem Stehbolzen eines Gasgenerators einen Bajonett-Verschluss zu bilden und weist dementsprechend eine Breite auf, die es erlaubt, einen solchen Stehbolzen in die Aussparung 2 einzuführen. Die Aussparung 2 weist dabei einen ersten, sich axial in Bezug auf die Längsachse des Gasleitelements 1 sich erstreckenden Bereich 21, einen in Querrichtung (d. h. in Umfangsrichtung) sich erstreckenden Bereich 22 und einen sich wieder axial erstreckenden, zurücklaufenden Bereich 23 auf. Durch axiales Aufsetzen des Gasleitelements 1 auf einen Stehbolzen eines Gasgenerators, bis dieser das Ende des Abschnitts 21 erreicht, ein daraufhin erfolgendes Drehen von Hülse und Stehbolzen relativ zueinander, bis der Stehbolzen das Ende des Bereichs 22 erreicht und ein anschließendes erneutes axiales Verschieben, bis der Stehbolzen am Ende des Bereichs 23 zur Anlage kommt, ist ein Bajonett-Verschluss realisierbar.

Die in der Figur 1 dargestellte Form der schlitzförmigen Aussparung 2 zur Realisierung des Bajonett-Verschlusses ist dabei nur beispielhaft zu verstehen. Insbesondere kann die Länge und Form des letzten Bereichs 23 auch in anderer Weise ausgeführt sein. Auch kann auf den Bereich 23 ganz verzichtet werden, insbesondere dann, wenn der Stehbolzen zusätzlich mittels einer Verrastung in der Aussparung 2 des Gasleitelementes gesichert ist.

Das Gasleitelement 1 kann beispielsweise aus Kunststoff oder aus Metall bestehen. Es kann als gezogenes oder als gerolltes Teil ausgebildet sein. Die am zweiten Ende 12 dargestellte Öffnung kann auch in anderer Form als dargestellt ausgebildet sein, sich beispielsweise schlitzartig in die Umfangswand 13 erstrecken. Weiter können Ausführungsbeispiele vorgesehen sein, bei denen das zweite Ende 12 geschlossen ausgebildet ist. Auch die Form des Gasleitelementes ist variierbar. Beispielsweise kann dieses statt zylindrisch oval oder kegelförmig ausgebildet sein, insbesondere dann, wenn die Bereiche des Gasleitelementes, die an der Realisierung eines Bajonett-Verschlusses mitwirken, an einer vorstehenden Lasche ausgebildet sind, wie dies beispielsweise bei der Figur 2 dargestellt ist. Auch kann das Gasleitelement 1 als längliches Gasleitrohr mit einer Mehrzahl seitlicher Gasaustrittsöffnungen ausgebildet sein.

Die Figuren 2 und 3 zeigen ein alternatives Ausführungsbeispiel eines Gasleitelementes 1, wobei die Figur 3 den abgerollten Zustand des Gasleitelementes 1 darstellt. Das Gasleitelement 1 ist ebenfalls zylinderförmig mit einem ersten Ende 11, einem zweiten Ende 12, einer Umfangswand 13 und einer Innenbohrung 14 ausgebildet. Anders als beim Ausführungsbeispiel der Figur 1 wird das erste Ende 11 durch eine von der Umfangswand 13 axial vorstehende Lasche 15 gebildet, die ein stirnseitig axial vorstehendes Teil des Gasleitelements 1 darstellt. Wie aus der Figur 3 ersichtlich ist, ist die Lasche 15 einstückig mit der Umfangswand 13 ausgebildet. Sie weist zwei bezüglich einer Achse 151 axialsymmetrische Teile 15a, 15b auf, die aufeinander geklappt sind, wodurch eine verstärkte Lasche 15 mit doppelter Materialdicke entsteht. Die Verstärkung kann dabei nach innen oder nach außen erfolgen, d. h. das Segment 15a kann unter dem Segment 15b oder auf dem Segment 15b zur Anlage kommen. In beiden Fällen wird eine Verstärkung des für den Bajonett-Verschluss vorgesehenen Bereichs bereitgestellt, so dass im Auslösefall auftretende axiale Kräfte auch bei geringer Materialdicke des Gasleitelements 1 sicher aufgenommen werden können.

Aufgrund der Bereitstellung einer verstärkten Lasche 15 an dem einen Ende 11 des Gasleitelementes 1 ist die schlitzförmige Aussparung 2a zur Aufnahme eines Stehbolzens eines Gasgenerators derart ausgeführt, dass der erste axiale Bereich 21 a durch den seitlichen Rand der Lasche 15 definiert wird, der sich quer erstreckende Bereich 22a im Wesentlichen durch eine Aussparung in der Umfangswand 13 und der sich wiederum axial erstreckende Bereich 23a durch Aussparungen in den beiden axialsymmetrischen Laschenteilen 15a, 15b realisiert sind, so dass dieser letzte Bereich 23a, in dem der Stehbolzen des Gasgenerators im montierten Zustand positioniert ist, verstärkt ausgebildet ist. Die axiale Steckbewegung zwischen Gasleitelement 1 und Stehbolzen erfolgt dabei nicht in geführter Form, da der erste axiale Bereich 21 a nur einen seitlichen Anschlag und keine beidseitig begrenzte Aussparung darstellt.

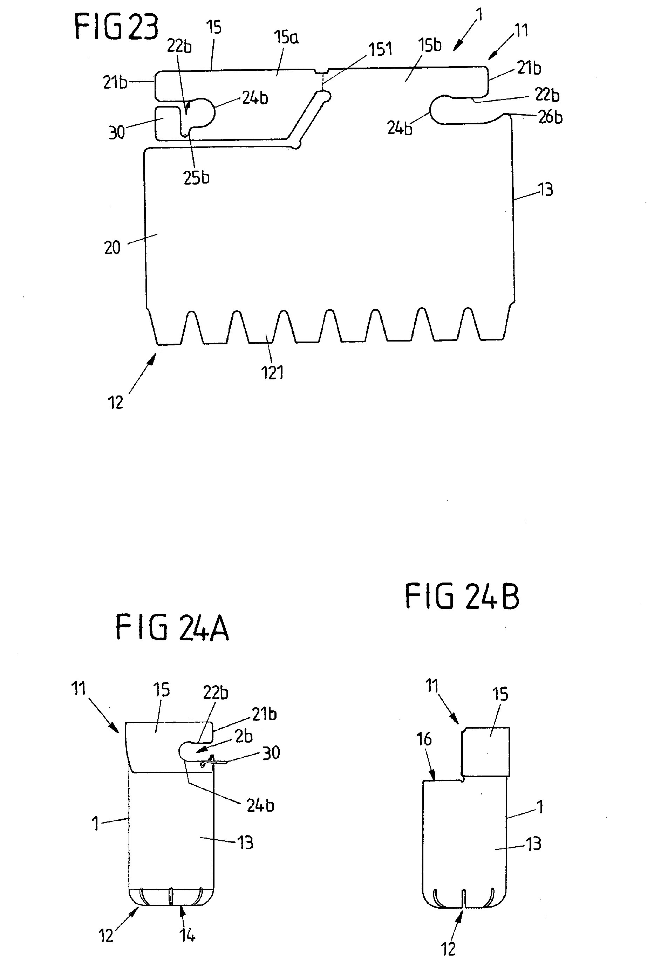

Die Figuren 23 bis 25B zeigen ein weiteres Ausführungsbeispiel eines Gasleitelementes 1, das ähnlich wie im Ausführungsbeispiel der Figuren 2 und 3 ausgebildet ist. Die Figur 23 zeigt dabei den abgerollten Zustand des Gasleitelementes 1 unter Darstellung eines Materialzuschnitts 20.

Das Gasleitelement 1 ist wiederum zylinderförmig ausgebildet und weist ein erstes Ende 11, ein zweites Ende 12, eine Umfangswand 13 und eine Innenbohrung 14 auf.

Ähnlich wie beim Ausführungsbeispiel der Figuren 2 und 3 wird das erste Ende 11 durch ein vorstehendes Teil 15 gebildet, das gemäß der Figur 23 durch Klappen eines im flach ausgebreiteten Materialzuschnitt 20 ausgeschnittenen Teilbereichs 15a auf einen dazu im Wesentlichen symmetrisch ausgebildeten Teilbereich 15b des Materialzuschnitts 20 gebildet ist. Der ausgeschnittene Teilbereich 15a ist dabei nur über eine in axialer Richtung verlaufende Klappachse 151 mit dem Materialzuschnitt 20 verbunden.

Sowohl in dem Teilbereich 15a als auch in dem Teilbereich 15b ist jeweils ein quer verlaufender Bereich 22b ausgebildet, wobei die Bereiche 22b nach Klappen des Teilbereichs 15a auf den Teilbereich 15b übereinander zu liegen kommen und einen Fügekanal 2b bilden.

Die Teilbereiche 15a und 15b sind weitgehend axialsymmetrisch in Bezug auf die Klappachse 151 ausgebildet. Eine gewisse Abweichung von einer vollständigen Axialsymmetrie ist zum einen dadurch gegeben, dass in dem Teilbereich 15a an dessen in Umfangsrichtung außen liegenden Ende eine biegbare Lasche 30 ausgebildet ist, die in den Fügekanal 2b bzw. den quer verlaufenden Bereich 22b hineinragt. Durch eine Materialreduzierung 25b ist dabei sichergestellt, dass die Lasche 30 biegbar an dem Teil 15a ausgebildet ist.

Eine weitere Abweichung von einer vollständigen Axialsymmetrie liegt insofern vor, als der Teilbereich 15b des Materialzuschnitts 20 am Anfang des quer verlaufenden Bereichs 22b eine nasenartigen Erhebung 26b aufweist. Diese ist optional und kann dazu dienen, einen Stehbolzen sicherer in den Fügekanal 2b einzuführen.

Nach Aufeinanderklappen der beiden Teilbereiche 15a, 15b liegt ein verstärktes vorstehendes Teil 15 mit einer doppelten Materialdicke vor. Die Verstärkung kann dabei nach innen oder nach außen erfolgen, d. h. der Teilbereich bzw. das Segment 15a kann unter dem Teilbereich bzw. Segment 15b oder auf dem Teilbereich bzw. Segment 15b zur Anlage kommen, je nach Klapprichtung. In beiden Fällen wird eine Verstärkung des für den Bajonettverschluss vorgesehenen Bereichs bereitgestellt, so dass im Auslösefall auftretende axiale Kräfte auch bei geringer Materialdicke des Gasleitelementes sicher aufgenommen werden können.

Der Fügekanal 2b weitet sich zu einem Ende hin auf. Im dargestellten Ausführungsbeispiel erfolgt dies dadurch, dass das Ende 24b im Wesentlichen kreisförmig ausgebildet ist. Eine Aufweitung kann jedoch auch in anderer Weise erfolgen, beispielsweise durch graduelle Vergrößerung der Breite des quer verlaufenden Bereichs 22b. Ein mit einer Aufweitung verbundener Vorteil besteht darin, dass im verbundenen Zustand des Bajonettverschlusses noch ein gewisses Spiel zwischen dem Gasleitelement 1 und dem Stehbolzen bzw. dem Gasgenerator besteht. Eine Aufweitung des Fügekanals 2b ist jedoch optional.

Gemäß der Figur 23 sind am zweiten Ende 12 des Gasleitelements 1 mehrere Zähne 121 vorgesehen, die bei Herstellen des Gasleitelements 1 eingebogen werden.

Das erste Ende 11 des Gasleitelements 1, und dort das vorstehende Teil 15, bildet den ausschließlich im Wesentlichen quer verlaufenden Fügekanal 2b aus. Der seitliche Rand 21 b des vorstehenden Teils 15 bildet dabei in Umfangsrichtung einen Anschlag aus. Es kann vorgesehen sein, dass ein in den Fügekanal 2b einzuführender Stehbolzen an diesem Anschlag 21b in axialer Richtung geführt wird, bis er in den Fügekanal 2b gelangt. Eine axiale Steckbewegung des Gasleitelementes 1 in Bezug auf einen in den Fügekanal 2b einzuführenden Stehbolzen kann jedoch auch vollständig in nicht geführter Form erfolgen, ohne dass der Stehbolzen an dem seitlichen Rand 21b entlanggeführt wird, sondern stattdessen in Abstand zu diesem in axialer Richtung bewegt wird. Dabei ist zu beachten, dass der Stehbolzen bei Ausführen der axialen Steckbewegung irgendwann in Anschlag an das stirnseitige Ende 16 der hülsenförmigen Umfangswand 13 gelangt, vgl. Fig. 24B. Anschließend erfolgt dann in Umfangsrichtung eine Drehbewegung, wobei der Stehbolzen in den Fügekanal 2b des vorstehenden Teils 15 eingeführt wird.

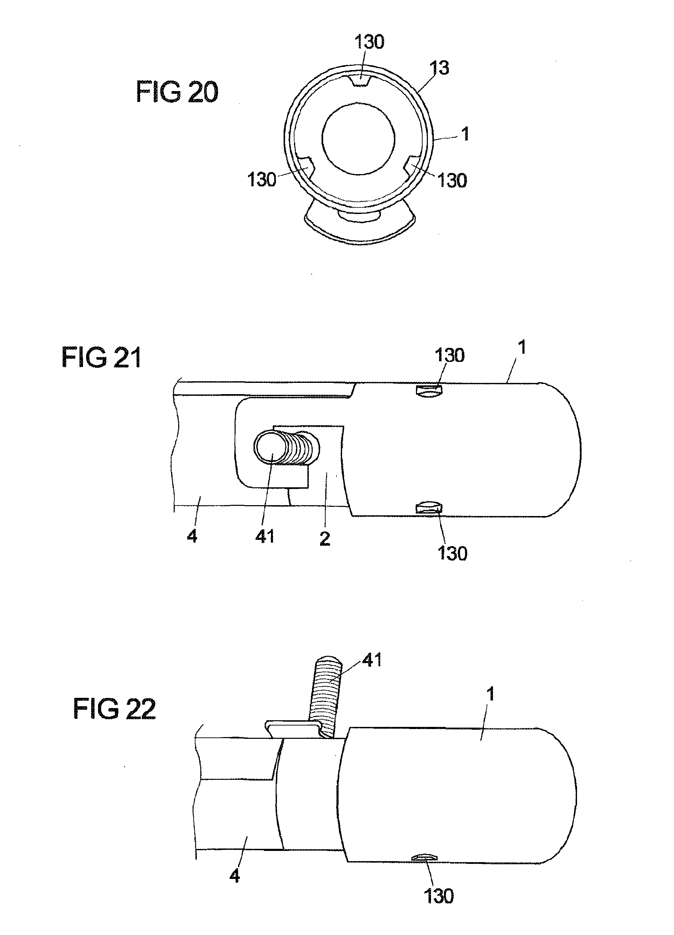

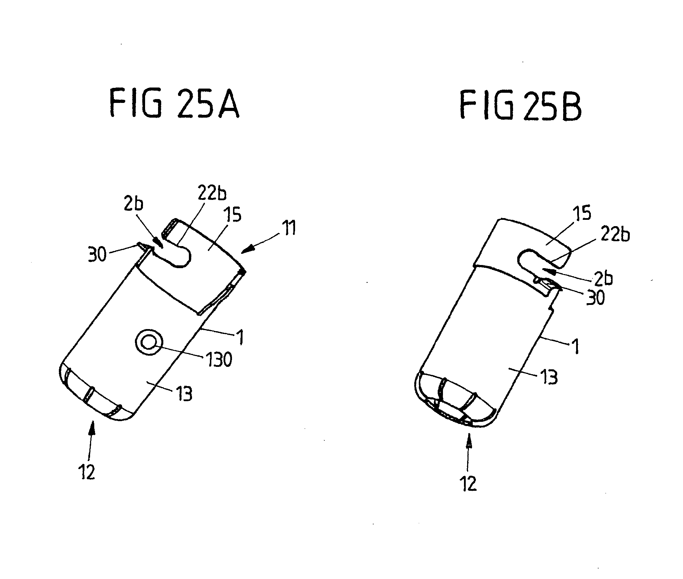

Die Figuren 25A und 25B zeigen das Gassackelement der Figuren 24A, 24B in zwei unterschiedlichen perspektivischen Darstellungen. In der perspektivischen Darstellung der Figur 25A ist dabei zu erkennen, dass das Gasleitelement eine lokale Einpressung 130 aufweist, die eine punktuelle Verengung der Innenbohrung 14 des Gasleitelementes 1 darstellt. Eine solche lokale Einpressung 130 wirkt als Kippsicherung während des Ausströmvorgang des Gases. Statt einem können auch mehrere solcher lokalen Einpressungen 130 vorgesehen sein. Gleichzeitig wird darauf hingewiesen, dass diese lediglich optional sind. Solche Kippsicherungen sind auch in den Figuren 20 bis 22 beschrieben, auf die ergänzend Bezug genommen wird.

Die Figur 25B zeigt die in Bezug auf die Figur 23 erläuterte Lasche 30. In der Figur 25B ist die Lasche 30 nach außen umgebogen, so dass der Fügekanal 2b zur Aufnahme eines Stehbolzens freigegeben ist. Nach Einführen eines Stehbolzens in den Fügekanal 2b wird die Lasche 30 wieder zurückgebogen, wodurch der Stehbolzen in dem Fügekanal 2b gesichert ist und verhindert wird, dass sich das Gasleitelement 1 von dem Bolzen herunterarbeiten kann.

Die in den Figuren 23 bis 25B dargestellte Ausführungsvariante kann vielfältige Abwandlungen erfahren. Beispielsweise kann der Fügekanal 2b eine andere Form aufweisen und/oder an anderer Stelle des vorstehenden Teils 15 ausgebildet sein. Eine Verrastung eines Stehbolzens im Fügekanal kann auch in anderer Weise als über die biegsame Lasche 30 erfolgen. Beispielsweise kann der Fügekanal eine Engstelle aufweisen und/oder kann ein Federelement in den Fügekanal hineinragen. Eine Verriegelung kann auch über Anzugsmomente erfolgen. Weiter wird darauf hingewiesen, dass das Design des Gasleitelementes 1 nicht an eine zylindrische Form gebunden ist. Dieses kann alternativ z.B. oval oder keglig ausgebildet sein. Auch kann das Gasleitelement mit oder ohne eine stirnseitige Öffnung ausgebildet sein.

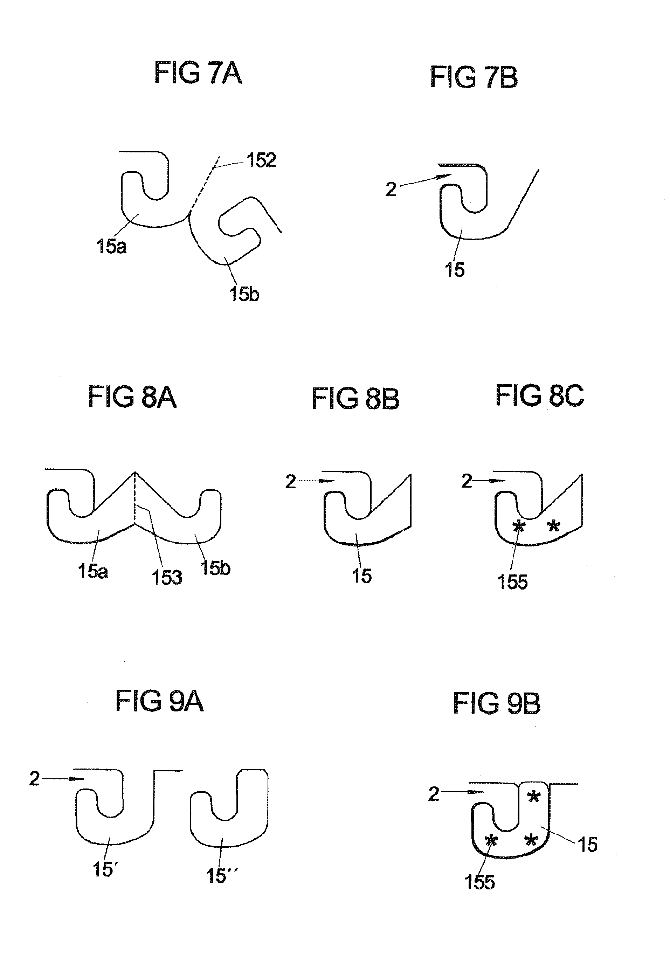

Weiter wird darauf hingewiesen, dass die Bildung eines Verstärkungsbereichs durch Aufeinanderklappen zweier Teilbereiche des Materialzuschnitts 20 lediglich beispielhaft zu verstehen ist. Alternativ kann die Materialdicke so gewählt werden, dass die axialen Kräfte auch ohne Verstärkung beherrscht werden. Auch können Materialdoppler eingesetzt werden, wie anhand der Figuren 9A, 9B noch beschrieben werden wird.

Das Gasleitelement 1 besteht beispielsweise aus Blech.

Die Figur 4 zeigt ein weiteres Ausführungsbeispiel eines Gasleitelementes 1, das mittels eines Bajonett-Verschlusses mit einem Stehbolzen eines Gasgenerators verbindbar ist. Das Ausführungsbeispiel der Figur 4 ist weitgehend gemäß dem Ausführungsbeispiel der Figur 1 ausgebildet und unterscheidet sich von letztgenanntem zum einen dadurch, dass der zweite axiale Bereich 23c der schlitzförmigen Aussparung 2c kürzer ausgebildet ist. Zum anderen liegt ein Unterschied darin, dass im Ausführungsbeispiel der Figur 4 zusätzlich ein Verriegelungselement vorgesehen ist, das durch eine Lasche 3 gebildet ist, die im nicht montierten Zustand schräg in das Innere des Gasleitelements 1 ragt und an die schlitzförmige Aussparung 2c derart angrenzt, dass sie am Ende des quer verlaufenden Bereichs 22c, und zwar an der Seite, die dem ersten Ende 11 abgewandt ist, die Begrenzung des quer verlaufenden Bereichs 22c definiert.

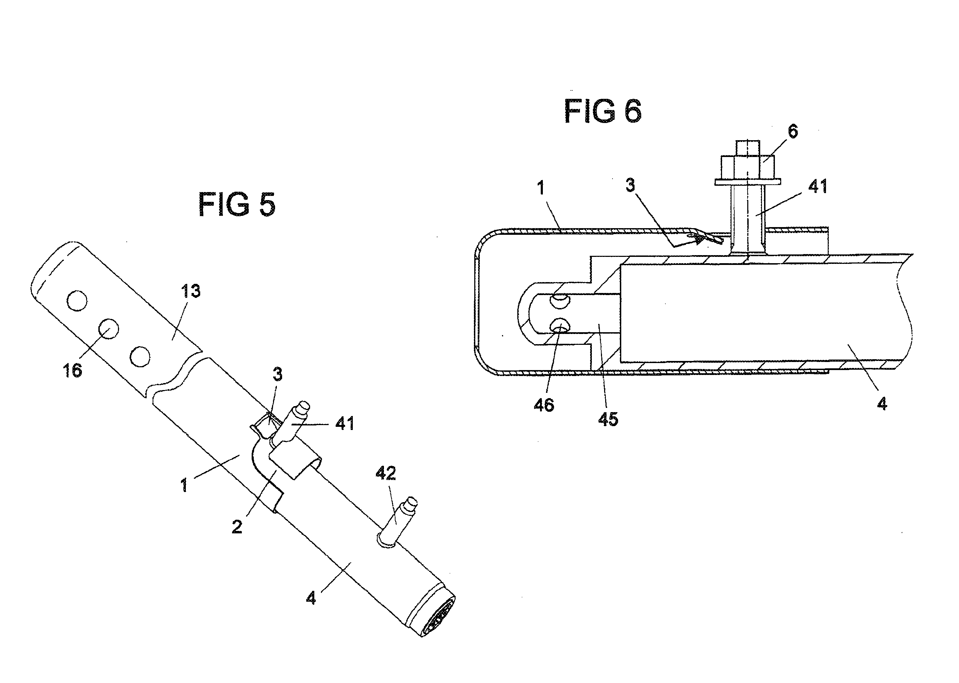

Die Verriegelungsfunktion eines derart ausgebildeten Verriegelungselements wird anhand der Figuren 5 und 6 erläutert. Die Figur 5 zeigt ein Gasleitelement entsprechend der Figur 4 nach der Montage auf einen Gasgenerator 4. Der Gasgenerator 4 ist als Rohrgasgenerator ausgebildet und besitzt dementsprechend eine im Wesentlichen zylindrische Form. Am Umfang des Rohrgasgenerators 4 sind zwei Stehbolzen 41, 42 fest angeschweißt. Die Stehbolzen 41, 42 dienen der Befestigung des Gasgenerators 4 an einer Fahrzeugstruktur wie beispielsweise dem Rahmen eines Fahrzeugsitzes oder dem Fahrzeugchassis oder der Befestigung des Gasgenerators 4 an einem Trägerelement, das mit einer solchen Fahrzeugstruktur verbunden ist. Sie weisen in allen dargestellten Ausführungsbeispielen bevorzugt eine Verschraubung auf, so dass der Bajonett-Verschluss durch eine aufgeschraubte Mutter zusätzlich gesichert werden kann.

Es wird darauf hingewiesen, dass das Gasleitelement 1 in der Figur 5 an seinem dem Gasgenerator 4 abgewandten Ende - anders als in der Figur 4 dargestellt - als Gasleitrohr mit einer Mehrzahl von in der Umfangswand 13 seitlich ausgebildeten Gasaustrittsöffnungen 16 ausgebildet ist. Dies verdeutlicht, dass das Gasleitelement 1 in unterschiedlichsten Ausgestaltungen realisiert sein kann. Der Bereich des Gasleitelements 1, der der Verbindung mit dem Gasgenerator 4 dient, ist jedoch entsprechend der Figur 4 ausgebildet. Der Bajonett-Verschluss wird zusätzlich durch eine Mutter 6, die auf den Gewindebolzen 41 aufgezogen wird, gesichert, wie in der Figur 6 schematisch dargestellt ist. Dabei stellt sich die Verriegelungslasche 3 gerade, wenn die Mutter 6 angezogen wird. Dadurch wird das Gasleitelement 1 zusätzlich an dem Gewindebolzen 41 fixiert.

Bei der Ausgestaltung der Figur 5, bei der das Gasleitelement 1 als Gasleitrohr ausgebildet ist, kann vorgesehen sein, dass das Gasleitrohr 1 die Gasverteilung zu 100% übernimmt. Das Gasleitrohr 1 sitzt somit dicht am Gasgenerator 4 auf und austretendes Gas strömt nur in das Rohr. Ein solches Gasleitrohr kann beispielsweise in türintegrierten Gassackmodulen für einen Kopfschutz oder für einen Kopf- und Thoraxschutz eingesetzt werden.

In der teilweise geschnittenen Ansicht der Figur 6 ist zusätzlich zu erkennen, dass der Rohrgasgenerator 4 einen Gasaustrittsstutzen 45 ausbildet, an dem radial und schubneutral Gasausströmöffnungen 46 ausgebildet sind. Der in radialer Richtung aus den Gasaustrittsöffnungen 46 ausströmende Gasstrom wird durch das Gasleitelement 1 umgeleitet und in einen nicht dargestellten Gassack gelenkt. Der Gasaustrittsstutzen 45 ragt dabei in das Gasleitelement 1 hinein.

Dadurch, in welchem Maße der Außendurchmesser des Rohrgasgenerators 4 und der Innendurchmesser des Gasleitelementes 1 aufeinander abgestimmt sind, und wie stark das Gasleitelement 1 beispielsweise mittels der Mutter 6 an den Gasgenerator 4 angepresst ist, kann die Gasdichtheit der Verbindung zwischen dem Gasleitelement 1 und dem Gasgenerator 4 den Anforderungen angepasst werden. Insbesondere kann eine vollständige Gasdichtheit oder alternativ ein definierter Teilgasstrom, der im Verbindungsbereich mit dem Gasgenerator 4 aus dem Gasleitelement 1 ausströmt, bereitgestellt werden.

Die Figuren 7A, 7B, 8A, 8B, 8C und 9A, 9B zeigen Ausführungsvarianten verstärkter Laschen 15 eines Gasleitelements, die einen Fügekanal 2 oder einen Teil des Fügekanals für einen Bajonett-Verschluss ausbilden. Der grundsätzliche Aufbau entspricht dem der Figur 2. Eine verstärkte Lasche 15 ist dabei vorteilhaft, um die bei Strömen von Gas aus dem Gasgenerator in das Gasleitelement entstehenden axialen Kräfte zu beherrschen. Alternativ dazu kann die Materialdicke des Gasleitelementes so gewählt werden, dass die axialen Kräfte auch ohne Verstärkung beherrschbar sind. Beim Ausführungsbeispiel der Figuren 7A, 7B ist wie beim Ausführungsbeispiel der Figur 2 am Gasleitelement 1 eine Lasche 15 ausgebildet, die zwei spiegelsymmetrische Laschenteile 15a, 15b aufweist. Anders als beim Ausführungsbeispiel der Figur 2 verläuft die Symmetrieachse und Klappkante 152 jedoch nicht in Umfangsrichtung, sondern schräg. Dabei kann grundsätzlich ein beliebiger Winkel realisiert sein.

Im Ausführungsbeispiel der Figur 8A sind die beiden spiegelsymmetrischen Laschenteile 15a, 15b um eine axial verlaufende Symmetrieachse und Klappkante 153 klappbar. Die Figur 8B zeigt den zusammengeklappten Zustand und die durch die übereinander liegenden Laschenteile 15a, 15b gebildete Verstärkung. Gemäß der Figur 8C können die zusammengeklappten Teile 15a, 15b zusätzlich durch punktuelle Verbindungen 155 miteinander verbunden werden. Solche punktuellen Verbindungen 155 können beispielsweise durch punktuelles Verschweißen bereitgestellt werden. Sie erlauben eine größere Kraftübertragung im Bereich des Stehbolzens bei kleiner Fläche und minimaler Materialdicke des Gasleitelements.

In der Figur 9A ist eine Ausführungsvariante dargestellt, bei der einer Lasche 15' des Gasleitelementes, die zur Bereitstellung eines Fügekanals 2 eines Bajonett-Verschlusses vorgesehen ist, ein identisch geformtes Laschenteil 15" als Materialdoppler aufgelegt und geeignet fixiert wird. Die Fixierung erfolgt, wie in der Figur 9B dargestellt, beispielsweise wiederum über punktuelle Verbindungen 155, die beispielsweise durch Verschweißen hergestellt sind. Es entsteht eine verstärkte Lasche 15.

Es wird darauf hingewiesen, dass die dargestellten Ausgestaltungen von durch klappbare oder doppelte Laschenteile gebildete Verstärkungen in dem Bereich des Gasleitelementes, das mittels eines Bajonett-Verschlusses mit einem Stehbolzen des Gasgenerators verbunden wird, nur beispielhaft zu verstehen sind. Beispielsweise kann auch vorgesehen sein, dass eine Verstärkung durch mehrfaches, gegebenenfalls wechselseitiges Klappen realisiert wird. Auch ist es nicht zwingend notwendig, dass die jeweiligen Klappteile kongruent sind.

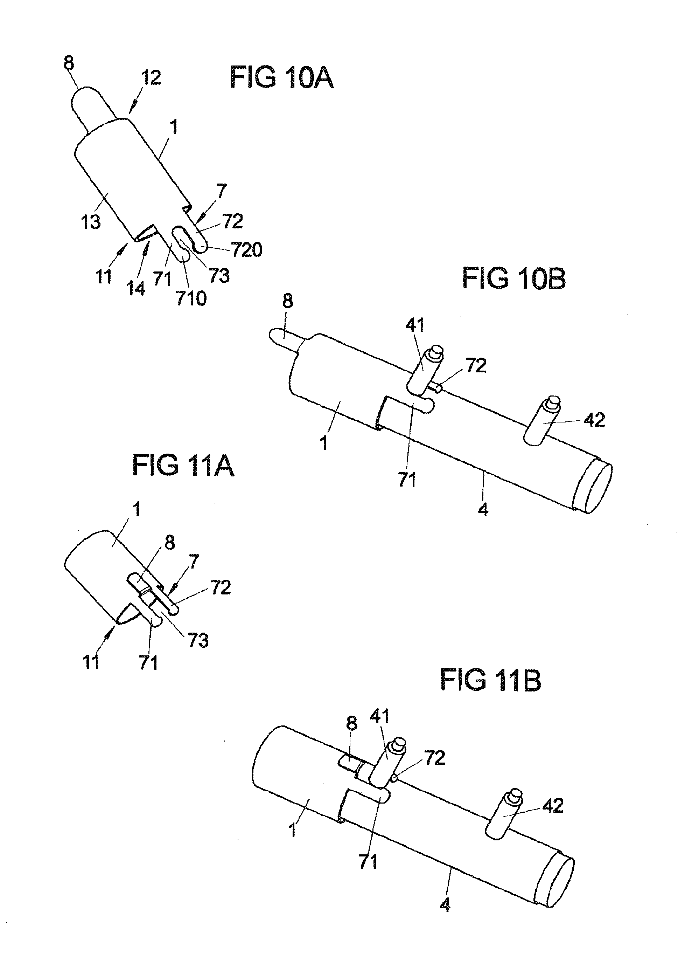

In den Figuren 10A bis 13 sind Ausführungsbeispiele eines Gasleitelementes beschrieben, das nicht mittels eines Bajonett-Verschlusses mit einem Gasgenerator verbunden ist, sondern durch Aufschieben auf einen Gasgenerator und zusätzliches Fixieren. Das Ausführungsbeispiel der Figur 10A sieht hierzu ein Gasleitelement 1 vor, das zwischen einem ersten Ende 11 und einem zweiten Ende 12 rohrförmig ausgebildet ist und dabei eine mit einer Innenbohrung 14 versehene Umfangswand 13 aufweist. An dem ersten Ende 11 ist stirnseitig ein Vorfixierungselement 7 angeordnet, das der Verbindung und Vorfixierung des Gasleitelements 1 an einem Stehbolzen des Gasgenerators dient. Das Vorfixierungselement 7 weist zwei sich im Wesentlichen axial erstreckende, parallele Rastarme 71, 72 auf, die zwischen sich eine längliche Aussparung 73 ausbilden. Die stirnseitigen Enden der Rastarme 71, 72 weisen dabei nach innen ragende Vorsprünge 710, 720 auf, die die Aussparung 73 in diesem Bereich verengen.

Am anderen Ende 12 des Gasleitelements 1 ist eine ebenfalls stirnseitig abstehende Einhängelasche 8 ausgebildet, die dazu vorgesehen ist, in einem Modulträger oder in einem Gassack eingehängt zu werden und hierdurch das Gasleitelement 1 zusätzlich axial in Bezug auf den Gasgenerator 4 zu fixieren.

Die Figur 10B zeigt das Gasleitelement der Figur 10A im auf einem Rohrgasgenerator 4 mit Stehbolzen 41, 42 montierten Zustand. Die Verbindung entsteht durch axiales Aufschieben des Gasleitelements 1 auf den Gasgenerator 4, wobei der Stehbolzen 41 in die Aussparung 73 eingeführt wird. Die Rastarme 71, 72 des Vorfixierungselementes 7 umgreifen dabei den einen Stehbolzen 41 des Gasgenerators 4 und stellen insofern eine Vorfixierung und Verrastung des Gasleitelementes 1 am Gasgenerator 4 bereit. Diese Vorfixierung wird in einem Ausführungsbeispiel mittels einer Mutter entsprechend der Mutter 6 der Figur 6 zusätzlich gesichert. Bei Auftreten großer axialer Kräfte auf das Gasleitelement 1 im Auslösefall reicht die Anpresskraft einer solchen Mutter und die durch die beiden Rastarme 71, 72 bereitgestellte Verrastung jedoch nicht aus, um das Gasleitelement 1 in axialer Position auf dem Gasgenerator 4 zu halten. Deswegen ist das Gasleitelement mittels der Einhänglasche 8 zusätzlich durch Einhängung an einen Modulträger oder Gassack fixiert.

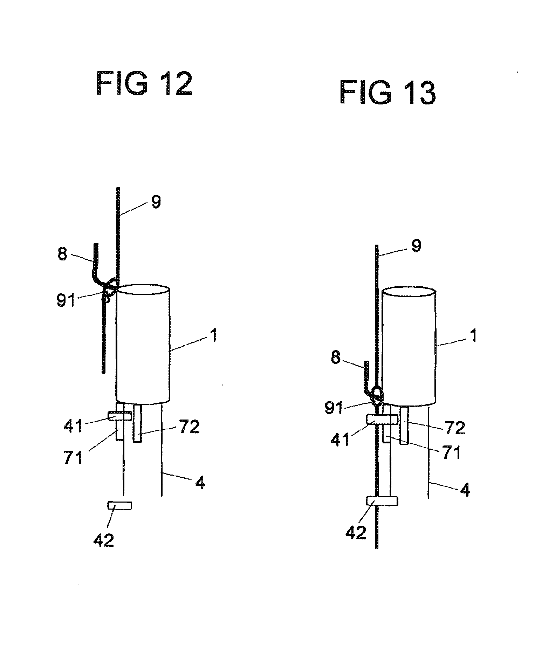

Eine entsprechende Fixierung zeigt beispielhaft die Figur 12, die das Gasleitelement 1, die Rastarme 71, 72, den Gasgenerator 4 und die Stehbolzen 41, 42 schematisch darstellt. Ebenfalls schematisch dargestellt ist, wie die Einhängelasche 8 eine Öffnung 91 einer festen oder flexiblen Struktur 9 durchgreift, bei der es sich beispielsweise um einen Modulträger eines Gassackmoduls, von dem der Gasgenerator 4 und das Gasleitelement 1 einen Teil bilden, bzw. ein Befestigungselement eines Gasgenerators handelt. Die Einhängelasche 8 ist durch die Öffnung 91 des Modulträgers 9 hindurchgeführt. Ebenso kann es sich bei der Struktur 9 um einen Gassack handeln, wobei die Einhängelasche 8 durch den Gassack insgesamt durchgeführt oder in eine oder nähere Gassacklagen des Gassacks eingeführt sein kann. Dabei ist die Einhängelasche 8 bevorzugt in einem Bereich des Gassacks eingehängt, der beim Aufblasen des Gassacks örtlich unverändert bleibt.

Die Figuren 11A und 11B zeigen ein alternatives Ausführungsbeispiel eines Gasleitelementes, das zum einen ein Vorfixierungselement 7 und zum anderen eine Einhängelasche 8 aufweist. Im Ausführungsbeispiel der Figuren 11A, 11B ist die Einhängelasche 8 ebenso wie das Vorfixierungselement 7 am ersten Ende 11 des Gasleitelementes 1 ausgebildet und durch Zurückklappen einer stirnseitig vorstehenden Lasche gebildet. Hierdurch entsteht gleichzeitig die längliche Aussparung 73 zwischen den Rastarmen 71, 72.

Die Vorfixierung des Vorfixierungselementes 7 an einem Stehbolzen 41 des Rohrgasgenerators 4 erfolgt entsprechend der Figur 10B, so dass auf die diesbezüglichen Ausführungen verwiesen wird. Zusätzlich erfolgt wiederum eine Einhängung der Einhängelasche 8 an einem Modulträger oder am Gassack und damit eine zusätzliche axiale Fixierung des Gasleitelementes 1 am Gasgenerator 4.

Die entsprechende Einhängung ist in der Figur 13 beispielhaft und schematisch dargestellt. Es sind wie in der Figur 12 schematisch das Gasleitelement 1, die Rastarme 71, 72, der Gasgenerator 4 und die Stehbolzen 41, 42 dargestellt. Die am ersten Ende 11 des Gasleitelementes 1 angeordnete und zurück geklappte Einhängelasche 8 ist durch eine Öffnung 91 einer festen oder flexiblen Struktur 9 geführt und sichert dadurch das Gasleitelement 1 in axialer Richtung. Bei der Struktur 9 kann es sich beispielsweise um einen Modulträger eines Gassackmoduls bzw. ein Befestigungselement eines Gasgenerators oder um einen Gassack handeln, wobei im letzten Fall die Einhängelasche durch den Luftsack insgesamt durchgeführt oder in eine oder mehrere Luftsacklagen eingeführt sein kann.

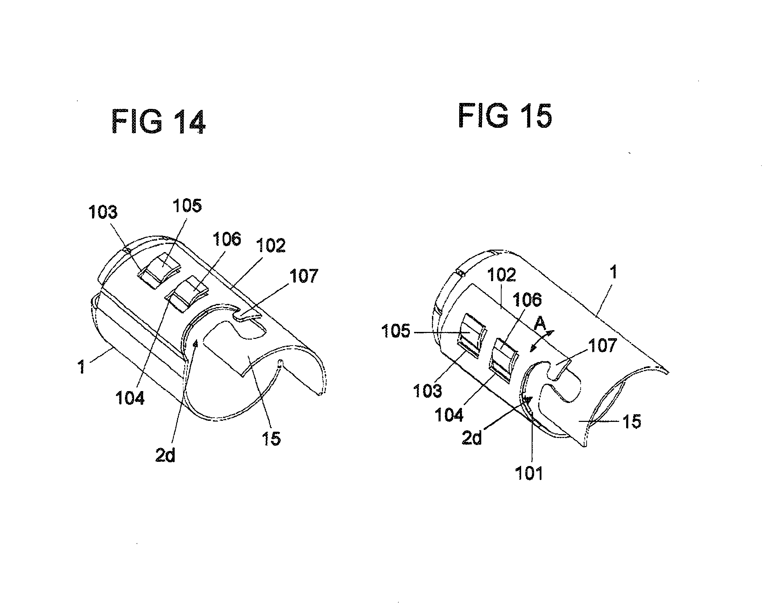

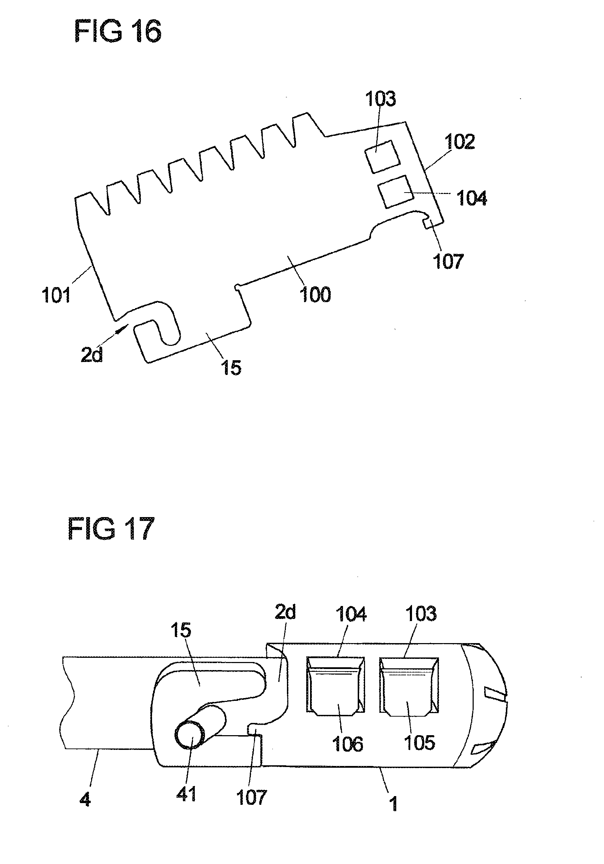

Die Figuren 14 bis 17 zeigen ein weiteres Ausführungsbeispiel eines hülsenförmigen Gasleitelementes 1, das mittels eines Bajonett-Verschlusses mit einem Stehbolzen eines Gasgenerators verbindbar ist. Das hülsenförmige Gasleitelement 1 ist durch einen in der Figur 16 dargestellten, beispielsweise durch Stanzen hergestellten Metallzuschnitt 100 gebildet, der zur Bildung des Gasleitelementes 1 aufgerollt wird. Dabei ist vorgesehen, dass die beiden in axialer Richtung verlaufenden Längskanten 101, 102 des Zuschnitts nicht fest miteinander verbunden werden, sondern einander überlappen und sich dabei wie eine Spiralfeder relativ zueinander bewegen können. Der Überlappungsbereich der beiden Längskanten 101, 102 beträgt beispielsweise 40º bis 60º.

Durch Ausstanzungen 103, 104 im Bereich der einen Kante 102 des Zuschnitts 100 und entsprechende Vorsprünge 105, 106 im Bereich der anderen Kante 101 des Zuschnitts 100 (letztere sind in den Figuren 15A, 15B, nicht jedoch in der Figur 16 dargestellt), die ineinander greifen, kann die Überlappung fixiert werden.

Der Zuschnitt 100 weist des Weiteren eine Lasche 15 ähnlich der Lasche 15 der Figur 2 auf, in der eine schlitzförmige Aussparung 2d zur Realisierung eines Fügekanals eines Bajonett-Verschlusses ausgebildet ist. Weiter bildet der Zuschnitt 100 angrenzend die Längskante 102 eine Rastnase 107 aus. Wie insbesondere in der Figur 15 zu erkennen ist, ist diese Rastnase 107 aufgrund der federartigen Ausgestaltung des Gasleitelementes in Umfangsrichtung entsprechend dem Pfeil A beweglich. Sie ragt dabei in den Fügekanal 2d hinein.

Wird nun der Gasgenerator 4 mit seinem Stehbolzen 41 mit dem Gasleitelement 1 gefügt, so kann die Nase 107 beim Einführen des Stehbolzens 41 zurückfedern, so dass der Stehbolzen 41 an seine vorgesehene Endposition gebracht werden kann. Anschließend federt die Nase 107 zurück, so dass der Stehbolzen 41 arretiert ist. Denn die Rastnase 107 kann in gegenläufiger Richtung nicht oder nur sehr wenig zurückfedern, da eine solche Bewegung durch die Vorsprünge 105, 106 blockiert wird.

Die Figur 17 zeigt perspektivisch von oben das mit dem Gasgenerator 4 mittels Bajonett-Verschluss verbundene Gasleitelement 1, das durch die Rastnase 107 den Stehbolzen 41 im Fügekanal 2d sichert.

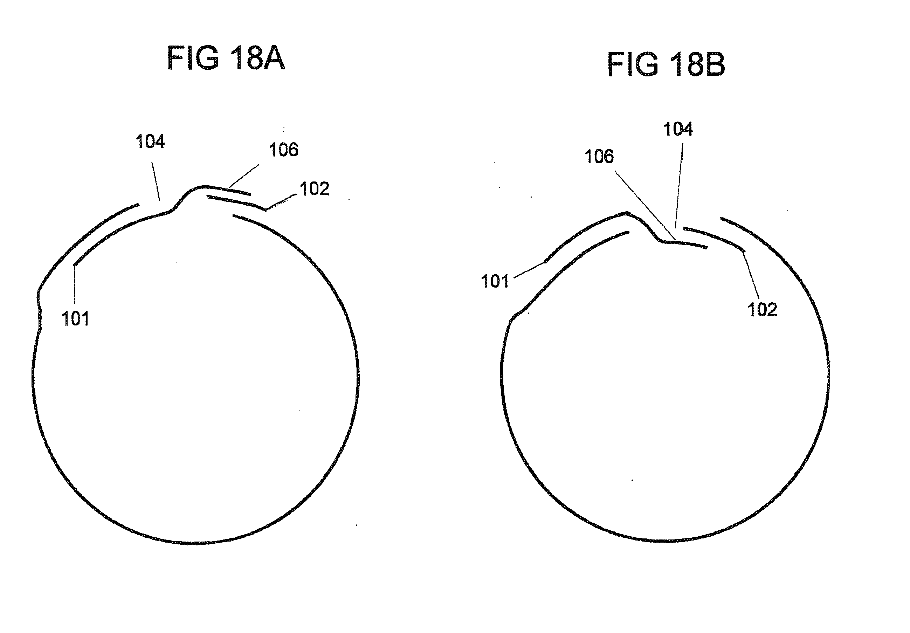

Die Figur 18A zeigt eine Schnittansicht des Gasleitelements 1 der Figur 14, wobei der Schnitt in einem Bereich erfolgt, in dem die eine Ausstanzung 104 und der entsprechende Vorsprung 106 realisiert sind. Es ist zu erkennen, dass der Vorsprung 106, der laschenartig vorsteht, nach außen gestellt ist und dementsprechend nach außen ragt. Gleiches gilt für den Vorsprung 105 und die Ausstanzung 103.

Die Figur 18B zeigt eine alternative Ausgestaltung, die grundsätzlich entsprechend den Figuren 14 bis 17 ausgebildet ist, bei der der überlappende Abschnitt jedoch nach innen geleitet ist. Die Ausstanzung 104 befindet sich im inneren Bogen. Der laschenartige Vorsprung 106, der durch die Ausstanzung 104 greift, ist vom äußeren Bogen in den inneren Bogen geführt. Er ragt also durch die Ausstanzung 104 nach innen. Gleiches gilt für den Vorsprung 105 und die Ausstanzung 103.

Ein Vorteil dieser Ausgestaltung liegt darin, dass durch die Vorsprünge 105, 106 aufgrund ihrer innenseitigen Anordnung ein sich entfaltender Gassack nicht beschädigt werden kann. Auch können die Vorsprünge 105, 106 so bemessen sein, dass bei Einströmen von Gas aus dem Gasgenerator 4 in das Gasleitelement 1 und einer damit verbundenen Kraft auf die durch die Vorsprünge 105, 106 und Aussparungen 103, 104 gebildeten formschlüssigen Verbindungen, die zu einem zumindest teilweisen Aufrichten der Vorsprünge 105, 106 führen kann, derart aufgerichtete nach innen ragende Vorsprünge 105, 106 sich dann an einem innerhalb des Gasleitelements 1 angeordneten Gasgenerator 4 abstützen, so dass eine verbesserte Abstützung am Gasgenerator 4 realisiert ist.

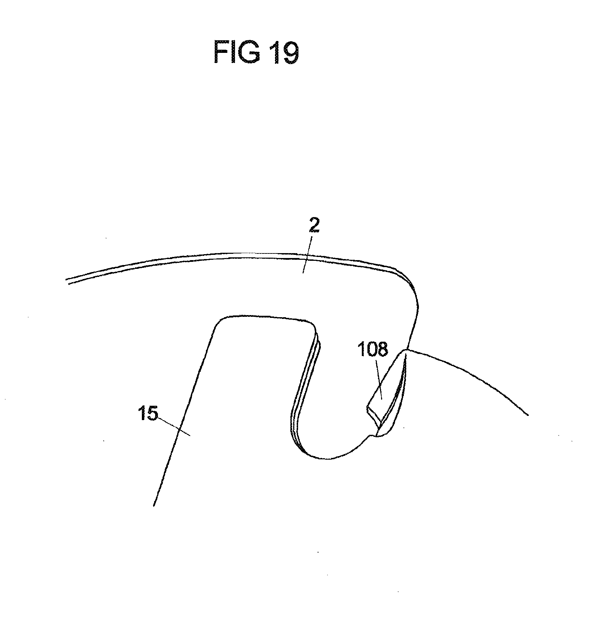

Die Figur 19 zeigt eine Ausführungsvariante, bei der im Bereich des Fügekanals 2, der der Führung des Stehbolzens 41 des Gasgenerators 4 dient, eine federnde Zunge 108 mit angeformt ist, um den Stehbolzen 41 in seiner Endposition zu arretieren. Die federnde Zunge 108 ist dabei benachbart der Endposition des Stehbolzens 41 im Fügekanal 2 ausgebildet. Sie ist beispielsweise aus dem umliegenden Material ausgestanzt und entsprechend geformt.

Auch bei dieser Ausführungsvariante kann der Stehbolzen 41 in einfacher Weise mit normaler Handkraft gefügt werden. Der umgekehrte Weg ist jedoch durch die zurück gefederte Zunge 108 blockiert.

Im Ausführungsbeispiel der Figur 19 ist die federnde Zunge 108 an einer Lasche 15 (entsprechend der Lasche 15 der Figur 2 oder der Lasche 15 der Figuren 13 bis 17) angeformt. Sie blockiert dabei den Stehbolzen des Gasgenerators, nachdem dieser in seine Endposition im Fügekanal 2 gebracht worden ist.

Die Figuren 20 bis 22 betreffen Ausgestaltungen, bei denen ein hülsenförmiges Gasleitelement 1 mittels Bajonett-Verschluss mit einem Rohrgasgenerator 4 verbunden ist. Dabei sind in die Umfangswand 13 des Gasleitelementes 1 ein oder mehrere lokale Einpressungen 130 eingebracht, die in das Innere der Hülse 1 ragen. Die lokalen Einpressungen 130 werden dabei in das hülsenförmige Gasleitelement 1 eingebracht, bevor dieses auf den Gasgenerator 4 aufgesetzt wird. Am Gasgenerator 4 ist dabei kein den lokalen Einpressungen 130 entsprechendes Gegenprofil vorgesehen; vielmehr ist dessen Mantelfläche in üblicher Weise zylinderförmig ausgebildet.

Die lokalen Einpressungen 130 stellen punktuelle Verengungen dar. Sie dienen einer zusätzlichen Fixierung des Gasleitelementes 1 am Gasgenerator 4 und wirken als Kippsicherung während des Ausströmvorgangs des Gases. Ein Verkippen des Gasleitelementes 1 gegenüber dem Gasgenerator 4 wird somit verhindert. Dabei ist das Ende des Gasleitelementes 1, das mit dem Gasgenerator 4 verbunden ist, nicht gasdicht ausgebildet, da Gas seitlich der lokalen Einpressungen 130 vorbeiströmen kann. Das andere Ende des Gasleitelementes 1 kann offen oder geschlossen ausgebildet sein.

Die Figur 21 zeigt das Gasleitelement der Figur 20 aufgesetzt auf einen Gasgenerator 4. Neben dem Bajonett-Verschluss sind zwei von drei lokalen Einpressungen 130 erkennbar, die als Kippsicherung wirken.

Die Zahl der lokalen Einpressungen 130 kann dabei variieren. Im Ausführungsbeispiel der Figur 22 ist nur eine einzige lokale Einpressung 130 vorgesehen. Diese ist gegenüberliegend, d.h. um 180º versetzt zum Stehbolzen 41 im Gasleitelement 1 ausgebildet. Auch hierdurch wird eine Kippsicherung erreicht.

In anderen Ausgestaltungen weist das Gasleitelement 1 statt punktueller Verengungen linienförmige Verengungen auf, die axial, radial und/oder schräg verlaufen können. Ein oder mehrere solcher linienförmiger Verengungen können dabei vorgesehen sein. Im Falle einer radial umlaufenden Verengung des Gasleitelementes könnte auch eine Gasdichtheit an dem mit dem Gasgenerator verbundenen Ende des Gasleitelementes 1 bereitgestellt werden.

Das erfindungsgemäße Gasleitelement wird in einem Ausführungsbeispiel in einem Seitenairbagmodul eingesetzt, insbesondere in einem Seitenairbagmodul mit einem Zwei-Kammer-Seitengassack, wobei das Gasleitelement derart ausgebildet ist, dass es aus dem Gasgenerator ausströmendes Gas in zwei Richtungen umgelenkt wird.

## Patentansprüche

1. Vorrichtung für ein Personen-Schutzsystem eines Fahrzeugs, die aufweist:
- einen Gasgenerator (4), der dazu ausgebildet und vorgesehen ist, im Auslösefall Gas zum Aufblasen eines Gassacks bereitzustellen, wobei der Gasgenerator (4) mindestens einen fest angeordneten und von der Mantelfläche des Gasgenerators (4) abstehenden Stehbolzen (41, 42) aufweist,
- ein mit dem Gasgenerator (4) verbundenes, hülsenförmiges Gasleitelement (1), das dazu ausgebildet und vorgesehen ist, aus dem Gasgenerator (4) ausströmendes Gas umzulenken und in einen aufzublasenden Gassack zu leiten, wobei
- das Gasleitelement (1) mittels eines Bajonett-Verschlusses mit mindestens einem der Stehbolzen (41) des Gasgenerators (4) verbunden ist,
- das Gasleitelement (1) zur Bildung eines Bajonett-Verschlusses mindestens einen Fügekanal (2, 2a, 2b, 2c, 2d) für den mindestens einen Stehbolzen (41) des Gasgenerators (4) ausbildet, und
- das Gasleitelement (1) in dem Bereich, in dem es den Fügekanal (2) bildet, zumindest teilweise durch eine von der Umfangswand (13) des Gasleitelements (1) axial abstehende Lasche (15) gebildet ist,
**dadurch gekennzeichnet,**
**dass** der Gasgenerator (4) länglich ausgebildet ist, dass das Gasleitelement (1) Mittel (107, 108, 3, 30) zur Verriegelung des Bajonett-Verschlusses aufweist und dass die Mittel zur Verriegelung des Bajonett-Verschlusses eine am Gasleitelement (1) angeordnete, biegbare Lasche (30) umfassen, mittels derer der Bajonett-Verschluss nach Erreichen der Endposition des Stehbolzens (41) durch Umbiegen der Lasche (30) gesichert werden kann.

2. Vorrichtung nach Anspruch 1, **dadurch gekennzeichnet, dass** der Fügekanal (2b) ausschließlich aus einem im Wesentlichen quer zur Längsachse des Gasleitelements (1) verlaufenden Bereich (22b) besteht, der an einem vorstehenden Teil (15) des Gasleitelements (1) ausgebildet ist.

3. Vorrichtung nach Anspruch 1 oder 2, **dadurch gekennzeichnet, dass** die Mittel zur Verriegelung des Bajonett-Verschlusses eine federnd am Gasleitelement (1) angeordnete oder ausgebildete Rastnase (107, 108) umfassen, die den Stehbolzen (41) nach Erreichen seiner Endposition im Bajonett-Verschlusses arretiert.

4. Vorrichtung nach einem der vorangehenden Ansprüche, **dadurch gekennzeichnet, dass** die Mittel zur Verriegelung des Bajonett-Verschlusses eine am Gasleitelement (1) angeordnete Lasche (3) umfassen, die im nicht montierten Zustand schräg in das Innere des Gasleitelements (1) ragt und die bei Aufsetzen einer Mutter (6) auf den Stehbolzen (4) und Anziehen der Mutter (6) sich gerade ausrichtet und dabei das Gasleitelement (1) zusätzlich am Gasgenerator (4) fixiert.

5. Vorrichtung nach einem der vorangehenden Ansprüche, **dadurch gekennzeichnet, dass** das Gasleitelement (1) in dem Bereich, in dem es den Fügekanal (2) bildet, zumindest teilweise eine Materialverstärkung aufweist.

6. Vorrichtung nach Anspruch 5, **dadurch gekennzeichnet, dass** die Lasche (15) durch Aufeinanderklappen mindestens zweier Laschenteile (15a, 15b) gebildet oder ein Materialdoppler (15") auf der Lasche (15) angeordnet ist, so dass die Lasche (15) im Vergleich mit der Umfangswand (13) des Gasleitelements (1) eine erhöhte Materialdicke aufweist.

7. Vorrichtung für ein Personen-Schutzsystem eines Fahrzeugs, die aufweist:
- einen Gasgenerator (4), der dazu ausgebildet und vorgesehen ist, im Auslösefall Gas zum Aufblasen eines Gassacks bereitzustellen, wobei der Gasgenerator (4) mindestens einen fest angeordneten und von der Mantelfläche des Gasgenerators (4) abstehenden Stehbolzen (41, 42) aufweist,
- ein mit dem Gasgenerator (4) verbundenes, hülsenförmiges Gasleitelement (1), das dazu ausgebildet und vorgesehen ist, aus dem Gasgenerator (4) ausströmendes Gas umzulenken und in einen aufzublasenden Gassack zu leiten, wobei
- das Gasleitelement (1) mindestens eine Aussparung (73) aufweist, in die ein Stehbolzen (41) des Gasgenerators (4) bei Aufschieben des Gasleitelements (1) in axialer Richtung auf den Gasgenerator (4) eingeführt wird, sowie mindestens ein Sicherungselement (8), das dazu vorgesehen und ausgebildet ist, in eine weitere Struktur (9) eingehängt zu werden und dadurch das Gasleitelement (1) zusätzlich in axialer Richtung am Gasgenerator (4) zu sichern,
**dadurch gekennzeichnet,**
**dass** der Gasgenerator (4) länglich ausgebildet ist und dass das Sicherungselement (8) durch eine Einhängelasche gebildet ist, wobei das Ende der Einhängelasche in eine Richtung weist, die von dem Gasgenerator (4) weg gerichtet ist.

8. Vorrichtung nach Anspruch 7, **dadurch gekennzeichnet, dass** die Aussparung (73) an einem axial von der Umfangswand (13) des Gasleitelements (1) abstehenden Teil (7) ausgebildet ist.

9. Vorrichtung nach Anspruch 7 oder 8, **dadurch gekennzeichnet, dass** die Aussparung (73) in einem Teil (7) ausgebildet ist, das sich ausgehend von seiner Verbindung mit der Umfangswand (13) des Gasleitelements (1) in einer ersten Richtung erstreckt, und das Sicherungselement (8) sich ausgehend von seiner Verbindung mit der Umfangswand (13) des Gasleitelements (1) in eine zweite Richtung erstreckt, wobei die erste Richtung und die zweite Richtung entgegengesetzt sind.

10. Vorrichtung für ein Personen-Schutzsystem eines Fahrzeugs, die aufweist:
- einen Gasgenerator (4), der dazu ausgebildet und vorgesehen ist, im Auslösefall Gas zum Aufblasen eines Gassacks bereitzustellen, wobei der Gasgenerator (4) mindestens einen fest angeordneten und von der Mantelfläche des Gasgenerators (4) abstehenden Stehbolzen (41, 42) aufweist,
- ein mit dem Gasgenerator (4) verbundenes, hülsenförmiges Gasleitelement (1), das dazu ausgebildet und vorgesehen ist, aus dem Gasgenerator (4) ausströmendes Gas umzulenken und in einen aufzublasenden Gassack zu leiten, wobei
- das Gasleitelement (1) einen im Wesentlichen quer verlaufenden Fügekanal (2b) aufweist, in den mindestens einer der Stehbolzen (41) des Gasgenerators (4) durch eine in Umfangsrichtung erfolgende Drehbewegung einführbar ist, wobei der Fügekanal (2b) zumindest teilweise an einem stirnseitig axial vorstehenden Teil (15) des Gasleitelements (1) ausgebildet ist,
**dadurch gekennzeichnet,**
**dass** der Gasgenerator (4) länglich ausgebildet ist und dass das vorstehende Teil (15) eine biegbare oder flexible Lasche (30) aufweist, mittels derer der Fügekanal (2b) nach Einführen des Stehbolzens (41) in den Fügekanal (2b) verschließbar ist.

11. Vorrichtung nach Anspruch 10, **dadurch gekennzeichnet, dass** das vorstehende Teil (15) durch Klappen eines im flach ausgebreiteten Materialzuschnitt (20) des Gasleitelements (1) ausgeschnittenen Teilbereichs (15a), der nur über eine in axialer Richtung verlaufende Klappachse (151) mit dem Materialzuschnitt (20) verbunden ist, auf einen dazu im Wesentlichen symmetrisch ausgebildeten Teilbereich (15b) des Materialzuschnitts (20) gebildet ist, wobei in beiden Teilbereichen (15a, 15b) quer verlaufende Bereiche (22b) des Fügekanals (2b) ausgebildet sind, die nach Klappen des einen Teilbereichs (15a) auf den anderen Teilbereich (15b) übereinander zu liegen kommen.

## Claims

1. A device for a person protection system of a vehicle, which comprises:
- a gas generator (4) which is configured and provided to provide gas for inflating a gas bag in the case of activation, wherein the gas generator (4) comprises at least one firmly arranged stay bolt (41, 42) protruding from the shell surface of the gas generator (4),
- a sleeve-shaped gas conducting element (1) connected with the gas generator (4), which is configured and provided to divert gas flowing out of the gas generator (4) and guide it into a gas bag which is to be inflated, wherein
- the gas conducting element (1) is connected with at least one of the stay bolts (41) of the gas generator (4) by means of a bayonet connector,
- for forming a bayonet connector the gas conducting element (1) forms at least one joining channel (2, 2a, 2b, 2c, 2d) for the at least one stay bolt (41) of the gas generator (4), and
- in the region in which it forms the joining channel (2) the gas conducting element (1) is at least partly configured by a tab (15) axially protruding from the peripheral wall (13) of the gas conducting element (1),
**characterized in**
**that** the gas generator (4) is configured oblong, that the gas conducting element (1) comprises means (107, 108, 3, 30) for locking the bayonet connector and that the means for locking the bayonet connector comprise a bendable tab (30) arranged at the gas conducting element (1), by means of which the bayonet connector can be secured by bending the tab (30) after the end position of the stay bolt (41) is reached.

2. The device according to claim 1, **characterized in that** the joining channel (2b) exclusively consists of a region (22b) extending essentially transversely to the longitudinal axis of the gas conducting element (1), which is configured on a protruding part (15) of the gas conducting element (1).

3. The device according to claim 1 or 2 , **characterized in that** the means for locking the bayonet connector comprise a latching nose (107, 108) resiliently arranged or configured at the gas conducting element (1), which locks the stay bolt (41) in place after reaching its end position in the bayonet connector.

4. The device according to any of the preceding claims, **characterized in that** the means for locking the bayonet connector comprise a tab (3) arranged at the gas conducting element (1), which in the non-mounted condition obliquely protrudes into the interior of the gas conducting element (1) and which on placing a nut (6) onto the stay bolt (4) and tightening the nut (6) is straightened and thereby additionally fixes the gas conducting element (1) on the gas generator (4).

5. The device according to any of the preceding claims, **characterized in that** in the region in which it forms the joining channel (2) the gas conducting element (1) at least partly comprises a material reinforcement.

6. The device according to claim 5, **characterized in that** the tab (15) is configured by folding at least two tab parts (15a, 15b) onto each other or a material doubler (15") is arranged on the tab (15), so that the tab (15) has an increased material thickness as compared to the peripheral wall (13) of the gas conducting element (1).

7. A device for a person protection system of a vehicle, which comprises:
- a gas generator (4) which is configured and provided to provide gas for inflating a gas bag in the case of activation, wherein the gas generator (4) comprises at least one firmly arranged stay bolt (41, 42) protruding from the shell surface of the gas generator (4),
- a sleeve-shaped gas conducting element (1) connected with the gas generator (4), which is configured and provided to divert gas flowing out of the gas generator (4) and guide it into a gas bag which is to be inflated, wherein
- the gas conducting element (1) comprises at least one cutout (73), into which a stay bolt (41) of the gas generator (4) is introduced when the gas conducting element (1) is pushed onto the gas generator (4) in axial direction, and at least one securing element (8), which is provided and configured to be hooked into a further structure (9) and thereby additionally secure the gas conducting element (1) on the gas generator (4) in axial direction,
**characterized in**
**that** the gas generator (4) is configured oblong and that the securing element (8) is configured by a hang-in tab, wherein the end of the hang-in tab points in a direction which is directed away from the gas generator (4).

8. The device according to claim 7, **characterized in that** the cutout (73) is configured on a part (7) axially protruding from the peripheral wall (13) of the gas conducting element (1).

9. The device according to any of claims 7 or 8, **characterized in that** the cutout (73) is configured in a part (7) which extends in a first direction proceeding from its connection with the peripheral wall (13) of the gas conducting element (1), and the securing element (8) extends in a second direction proceeding from its connection with the peripheral wall (13) of the gas conducting element (1), wherein the first direction and the second direction are opposed.

10. A device for a person protection system of a vehicle, which comprises:
- a gas generator (4) which is configured and provided to provide gas for inflating a gas bag in the case of activation, wherein the gas generator (4) comprises at least one firmly arranged stay bolt (41, 42) protruding from the shell surface of the gas generator (4),
- a sleeve-shaped gas conducting element (1) connected with the gas generator (4), which is configured and provided to divert gas flowing out of the gas generator (4) and introduce it into a gas bag which is to be inflated, wherein
- the gas conducting element (1) comprises a essentially transversely extending joining channel (2b) into which at least one of the stay bolts (41) of the gas generator (4) can be introduced by a rotary movement effected in peripheral direction, wherein the joining channel (2b) is at least partly configured on a part (15) of the gas conducting element (1) which is axially protruding on the face,
**characterized in**
**that** the gas generator (4) is configured oblong and that the protruding part (15) comprises a bendable or flexible tab (30) by means of which the joining channel (2b) can be closed after introducing the stay bolt (41) into the joining channel (2b).

11. The device according to claim 10, **characterized in that** the protruding part (15) is configured by folding a partial region (15a) cut out in the material blank (20) of the gas conducting element (1) spread out flat, which is connected with the material blank (20) only via a folding axis (151) extending in axial direction, onto a partial region (15b) of the material blank (20) configured esssentially symmetrical thereto, wherein in both partial regions (15a, 15b) transversely extending regions (22b) of the joining channel (2b) are configured, which after folding the one partial region (15a) onto the other partial region (15b) come to lie one on top of the other.

## Revendications

1. Dispositif pour un système de protection de personne d'un véhicule, qui présente :
- un générateur de gaz (4) qui est réalisé et prévu afin de mettre à disposition, en cas de déclenchement, du gaz pour le gonflage d'un sac de gaz, le générateur de gaz (4) présentant au moins un goujon (41, 42) agencé fixement et dépassant de la surface enveloppe du générateur de gaz (4),
- un élément conducteur de gaz (1) en forme de douille relié au générateur de gaz (4) qui est réalisé et prévu afin de dévier du gaz sortant du générateur de gaz (4) et de le conduire dans un sac de gaz à gonfler,
- l'élément conducteur de gaz (1) étant relié à l'aide d'une fermeture à baïonnette à au moins l'un des goujons (41) du générateur de gaz (4),
- l'élément conducteur de gaz (1) réalisant pour la formation d'une fermeture à baïonnette au moins un canal d'assemblage (2, 2a, 2b, 2c, 2d) pour l'au moins un goujon (41) du générateur de gaz (4), et
- l'élément conducteur de gaz (1) étant formé dans la zone, dans laquelle il forme le canal d'assemblage (2), au moins en partie par une languette (15) dépassant axialement de la paroi périphérique (13) de l'élément conducteur de gaz (1), **caractérisé en ce que**
le générateur de gaz (4) est réalisé de manière oblongue, **en ce que** l'élément conducteur de gaz (1) présente des moyens (107, 108, 3, 30) pour le verrouillage de la fermeture à baïonnette et **en ce que** les moyens pour le verrouillage de la fermeture à baïonnette comportent une languette (30) pliable agencée sur l'élément conducteur de gaz (1), à l'aide de laquelle la fermeture à baïonnette peut être bloquée après l'atteinte de la position finale du goujon (41) par repliage de la languette (30).

2. Dispositif selon la revendication 1, **caractérisé en ce que** le canal d'assemblage (2b) se compose exclusivement d'une zone (22b) qui s'étend sensiblement transversalement à l'axe longitudinal de l'élément conducteur de gaz (1) et qui est réalisée sur une partie en saillie (15) de l'élément conducteur de gaz (1).

3. Dispositif selon la revendication 1 ou 2, **caractérisé en ce que** les moyens pour le verrouillage de la fermeture à baïonnette comportent un nez d'encliquetage (107, 108) qui est réalisé ou agencé de manière élastique sur l'élément conducteur de gaz (1) et qui arrête le goujon (41) après l'atteinte de sa position finale dans la fermeture à baïonnette.

4. Dispositif selon l'une quelconque des revendications précédentes, **caractérisé en ce que** les moyens pour le verrouillage de la fermeture à baïonnette comportent une languette (3) agencée sur l'élément conducteur de gaz (1), qui pénètre dans l'état non monté en biais à l'intérieur de l'élément conducteur de gaz (1) et qui s'oriente de manière droite lors du placement d'un écrou (6) sur le goujon (4) et du serrage de l'écrou (6) et fixe en outre l'élément conducteur de gaz (1) sur le générateur de gaz (4).

5. Dispositif selon l'une quelconque des revendications précédentes, **caractérisé en ce que** l'élément conducteur de gaz (1) présente, dans la zone dans laquelle il forme le canal d'assemblage (2), au moins en partie un renforcement de matériau.

6. Dispositif selon la revendication 5, **caractérisé en ce que** la languette (15) est formée par rabattement l'une sur l'autre au moins de deux parties de languette (15a, 15b) ou une doubleuse de matériau (15") est agencée sur la languette (15) de sorte que la languette (15) présente par rapport à la paroi périphérique (13) de l'élément conducteur de gaz (1) une épaisseur de matériau accrue.

7. Dispositif pour un système de protection de personne d'un véhicule, qui présente :
- un générateur de gaz (4) qui est réalisé et prévu afin de mettre à disposition, en cas de déclenchement, du gaz pour le gonflage d'un sac de gaz, le générateur de gaz (4) présentant au moins un goujon (41, 42) agencé fixement et dépassant de la surface enveloppe du générateur de gaz (4),
- un élément conducteur de gaz (1) en forme de douille relié au générateur de gaz (4) qui est réalisé et prévu afin de dévier du gaz sortant du générateur de gaz (4) et de le conduire dans un sac de gaz à gonfler,
- l'élément conducteur de gaz (1) présentant au moins un évidement (73), dans lequel un goujon (41) du générateur de gaz (4) est introduit lors du coulissement de l'élément conducteur de gaz (1) dans le sens axial sur le générateur de gaz (4), ainsi qu'au moins un élément de blocage (8) qui est prévu et réalisé afin d'être suspendu dans une autre structure (9) et de bloquer ce faisant l'élément conducteur de gaz (1) en outre dans le sens axial sur le générateur de gaz (4),
**caractérisé en ce que**
le générateur de gaz (4) est réalisé de manière oblongue et **en ce que** l'élément de blocage (8) est formé par une languette de suspension, l'extrémité de la languette de suspension étant dirigée dans une direction qui est opposée du générateur de gaz (4).

8. Dispositif selon la revendication 7, **caractérisé en ce que** l'évidement (73) est réalisé sur une partie (7) dépassant axialement de la paroi périphérique (13) de l'élément conducteur de gaz (1).

9. Dispositif selon la revendication 7 ou 8, **caractérisé en ce que** l'évidement (73) est réalisé dans une partie (7) qui s'étend à partir de sa liaison avec la paroi périphérique (13) de l'élément conducteur de gaz (1) dans un premier sens et l'élément de blocage (8) s'étend à partir de sa liaison avec la paroi périphérique (13) de l'élément conducteur de gaz (1) dans un second sens, le premier sens et le second sens étant opposés.

10. Dispositif pour un système de protection de personne d'un véhicule qui présente :
- un générateur de gaz (4) qui est réalisé et prévu afin de mettre à disposition, en cas de déclenchement, du gaz pour le gonflage d'un sac de gaz, le générateur de gaz (4) présentant au moins un goujon (41, 42) agencé fixement et dépassant de la surface enveloppe du générateur de gaz (4),
- un élément conducteur de gaz (1) en forme de douille relié au générateur de gaz (4) qui est réalisé et prévu afin de dévier du gaz sortant du générateur de gaz (4) et de le conduire dans un sac de gaz à gonfler,
- l'élément conducteur de gaz (1) présentant un canal d'assemblage (2b) s'étendant sensiblement transversalement, dans lequel au moins l'un des goujons (41) du générateur de gaz (4) peut être introduit par un mouvement de rotation s'effectuant dans le sens périphérique, le canal d'assemblage (2b) étant réalisé au moins en partie sur une partie (15) en saillie axiale côté avant de l'élément conducteur de gaz (1), **caractérisé en ce que**
le générateur de gaz (4) est réalisé de manière oblongue et **en ce que** la partie en saillie (15) présente une languette (30) pliable ou flexible, à l'aide de laquelle le canal d'assemblage (2b) peut être fermé après l'introduction du goujon (41) dans le canal d'assemblage (2b).

11. Dispositif selon la revendication 10, **caractérisé en ce que** la partie en saillie (15) est formée par rabattement d'une zone partielle (15a) découpée dans le flan de matériau (20) étendu à plat de l'élément conducteur de gaz (1) qui est reliée uniquement par un axe de rabattement (151) s'étendant dans le sens axial au flan de matériau (20), sur une zone partielle (15b) réalisée de manière sensiblement symétrique à celle-ci du flan de matériau (20), des zones (22b) du canal d'assemblage (2b) s'étendant transversalement dans les deux zones partielles (15a, 15b) étant réalisées, lesquelles viennent l'une sur l'autre après le rabattement d'une zone partielle (15a) sur l'autre zone partielle (15b).
